(19) Europäisches Patentamt

European Patent Office

Office européen des brevets

(11) Publication number: **0 475 454 A2**

# (12) EUROPEAN PATENT APPLICATION

(21) Application number: **91115660.2**

(22) Date of filing: **16.09.91**

(51) Int. Cl.5: **G01N 21/84**

(30) Priority: **14.09.90 JP 245411/90**
**14.09.90 JP 245412/90**
**14.09.90 JP 245413/90**
**05.10.90 JP 269137/90**
**05.10.90 JP 269138/90**
**05.10.90 JP 269139/90**
**08.02.91 JP 60754/91**

(43) Date of publication of application:
**18.03.92 Bulletin 92/12**

(84) Designated Contracting States:
**DE FR GB**

(71) Applicant: **FUJI PHOTO FILM CO., LTD.**
**210 Nakanuma Minami Ashigara-shi**
**Kanagawa(JP)**

(72) Inventor: **Okamura, Koki, c/o Fuji Photo Film**
**Co., Ltd.**
**798, Miyanodai, Kaiseimachi**
**Ashigarakami-gun, Kanagawa(JP)**
Inventor: **Sone, Shiro, c/o Fuji Photo Film Co.,**
**Ltd.**
**26-30, Nishiazabu 2-chome, Minato-ku**
**Tokyo(JP)**
Inventor: **Iwasa,Masakazu c/o Fuji Photo Film**
**co.,Ltd**
**26-30 Nishiazabu 2-chome**
**Minato-ku Tokio(JP)**

(74) Representative: **Patentanwälte Grünecker,**
**Kinkeldey, Stockmair & Partner**
**Maximilianstrasse 58**
**W-8000 München 22(DE)**

(54) **Defect inspection system.**

(57) A defect inspection system for scanning a surface of an inspected material to pick up image signals, followed by processing the signals to detect any defects. In order to eliminate noises due to background pattern of the inspected material, signals are processed through a density converter so that the densities within a certain range containing the center density corresponding to the density of the background field are converted to have a constant level. In order to clarify the outline of the signal portion showing a defect, spatial-filtering is effected by using a differentiation filter. The direction along which differentiation is effected, and the mask size of the differentiation filter may be changed to effect optimum spatial-filtering for the particular texture of the inspected material. A threshold may be used not to detect defects within an area (joint area or marginal portion) from which any defect are to be detected. Plural data sets may be stored in a memory to select a proper data set for processing the signal under an appropriate condition, each data set including the density convertion table, the directivity and size of the differentiation filter, and other parameters including the threshold.

# FIG. 1

## BACKGROUND OF THE INVENTION:

### Field of the Invention;

The present invention relates to a defect inspection system for scanning a material to be inspected, the material being generally in a web form, to pick up image signals which are processed to detect any faults or defects on the surface of the inspected material.

### Prior Art;

In the known systems for the inspection of the surface of web materials, such as steel plate, plastics film or paper sheet, the surface to be inspected is monitored through a television monitor camera to display any scratches, flaws or like external or internal defects so that such faults or defects are visually defected. It has hitherto been a general practice to display the output images of the surface of a web material picked up by a monitor camera without subjecting it to any image processing.

However, when the surface of a steel plate, plastics film or paper sheet is inspected, the displayed image of the scanned surface includes not only any images of defects on the surface but also the image of normal pattern of the background. The image of such a normal background surface without significant defect still contains noises, due to texture of the inspected material or minor changes of the surface condition. As a result, defects of the inspected surface become less distinguishable from the normal surface area displayed on the television monitor.

Another type defect inspection system has been known, in which image signals picked up by scanning an inspected material are compared with a pre-set threshold to discriminate that a defect is present when a particular image signal is above or below the threshold. However, this type of known systems has also a problem that noise components contained in the picked-up image signals are erroneously discrimanated as if there were any defects, leading to reduction in sensitivity and reliability of the system.

There also arises a case where the image signals have output levels which are fluctuated extensively. For example, when images are read through a CCD line sensor or CCD area sensor, the output levels of the read image signals are extensively fluctuated due to inuniformity of the characteristics of each picture cell or the unevenness of the intensity of illumination. The output levels of the signals are also greatly affeced by the change in incidence angle of the scanning beam with the surface of the test piece or material to be inspected and also by the change in incidence angle of the reflected beam into the optical system. Likewise, the output levels of the image signals are fluctuated due to unevenness of the surface condition, which is brought during the production of the inspected material and scattering within a wide range, an example of such unevenness being trivial undulation or other inserious unevenness on the surface of a rolled steel plate. Anyway, when the image signals contain such an intensive fluctuation, there is a fear that a signal indicating the presence of any fault or defect becomes indistinctive when compared with the threshold or that a noise signal contained in the image signals picked up during the scanning of normal background portion is judged as if it were an indication of any fault or defect. This causes a problem of reduction in reliability of the defect inspection operation.

In the conventional system wherein image signals are compared with a pre-set threshold to find out defects, the threshold must be shifted depending on the kind of the particular material under inspection, i.e. the threshold must be individually set to an appropriate value for each of the particular kind of the inspected material including, for example, steel plate, aluminum plate, copper plate, paper, synthetic resin films, magnetic disk, magnetic drum, IC wafer, etc.; and the threshold must be shifted to be set to an appropriate value depending on the change in condition (for example, the water content or dryness of the surface, adhesion of oils, change in color and the structural condition or texture) of the inspected material. This is beacuse a steel plate and a paper sheet have different reflectivities, and the reflectivities of the inspected materials are significantly affected by adhesion of oils, wetting with liquid or coating on the inspected surface. In view of the above, one approach for improving the sensitivity of the system would be processing of the image signals in various processing schedules. However, the appropriate processing schedules for individual image signals are kaleidoscopically diverted depending on the kind and condition of the material under inspection.

Accordingly, in order to inspect the test piece to detect any defects reliably at high sensitivity, it becomes necessary to change the conditions for the inspection operation within wide ranges. However, since the conditions for the inspection operation include not only the threshold but also other multiple parameters, it is difficult and cumbersome to set all of these parameters to appropriate values.

Meanwhile, when a web material taken up to form a roll is inspected, the portions vicinal to the leading and trailing ends of the roll are generally cut off and disposed not to be used as a material for the finished product, since a number of defects are often contained in such marginal portions. Similarly, in some fabrication line for the production of a steel plate, plural webs are joined together, for example, by welding to form a single web material which is fed to the subsequent production line. Since the portion vicinal to such a joint seam contains defects, such portion is cut off and disposed without being used as a material for the finished product. When such a web material is inspected by the use of the conventional defect inspection system wherein the image signals picked up by scanning throughout the entire area of the web material are processed by using a single pre-set threshold, the total number of sensed defects becomes large since a number of defects present in the marginal areas of the roll and/or the portion vicinal to the joint seam are discriminated, leading to the result that the web material is judged as if it were defective in its entirety due to multiple and/or large defects contained in the areas which are cut off to be disposed without being used.

When a long web material, such as a hot rolled steel sheet coil or a roll of a synthetic resin film, is inspected, the surface condition is changed along the width direction of the web since the surface condition along the width direction of a rolled sheet or film is considerably affected as the rolling condition is fluctuated. In general, the brim or marginal portions near the side edge of the web become wavy, rugged or otherwise become worse as compared to the center line portion so that the image signals picked up by scanning the brim portions contains larger noises. Furthermore, there is often found a case where a series of defects appears periodically along the width direction, such periodically appearing defects being caused under a certain rolling condition. However, in the conventional defect inspection system, the defects are discriminated by setting the threshold to a constant pre-set value while keeping the other parameters for inspection unchanged. Accordingly, when the parameters for inspection are selected to accommodate proper inspection of the central portion, the noise texture signals picked up frequently in the marginal background areas are discriminated as indicating defects. On the contrary, if the inspection condition is set to be adapted for the detection of defects in the marginal areas, failures in detection often occur on the central portion.

When it is predicted that defective zone extending through the entire width appear at a predetermined position or periodic defects are present at the estimated locations along the longitudinal direction, such a marginal portion is expected to be cut off, and thus need not be discriminated as the defects. However, in the conventional defect inspection system all such defects are detected at high fidelity to make the subsequent processing rather troublesome.

OBJECTS AND SUMMARY OF THE INVENTION:

Accordingly, a first object of this invention accomplished to solve the aforementioned problems is to provide a defect inspection system for scanning a surface of an inspected material to pick up image signals from which noise signals due to minor change or texture in the normal background are removed thereby to facilitate discrimination of significant defects.

A second object of this invention is to provide a defect inspection system for scanning a surface of an inspected material to pick up image signals which are compared to a pre-selected threshold for the removal of noise signals thereby to improve reliability of the defect inspection operation.

A third object of this invention is to provide a defect inspection system whereby defects on the surface of a test piece can be detected reliably even when the image signals contain a signal due to uneven surface condition or the image signals include intensively fluctuating low frequency components caused by change in output level due to the inherent optical characteristics of the used scanning system.

A fourth object of this invention is to provide a defect inspection system wherein the conditions for the defect inspection operation, e.g. setting of the threshold and selection of signal processing condition, can be readily set to adapt the particular kind and condition of the material under inspection.

A fifth object of this invention is to provide a defect inspection system for the inspection of an inspected material such as web material which has been wound to form a roll and having one or more joint seams, wherein any defects within the portions vicinal to the seams, such portions being cut off and disposed without using the same, are not discriminated as defective faults so that the defects present only in the portions of the inspected web material for the practical use are effectively detected.

A sixth object of this invention is to provide a defect inspection system for the inspection of a web material having brim or marginal areas within which weaving, fluctuation, shrinkage, scratches, rugged portions or other defects appear sometimes periodically, whereby the result of inspection is not affected by the presence of such defects within the marginal areas, yet the defects in the central portion of the web being sensed at high sensitivity. By the use of this modification of the system of the invention, when the

EP 0 475 454 A2

width of each marginal portion to be cut off and disposed in the subsequent operation is known, the operation condition of the system may be set so that the defects in such disposable portions are not detected.

The first object of the invention is achieved by the provision of a defect inspection system for scanning a surface of an inspected material to pick up image signals from which any defects are detected, which comprises:

(a) an A/D converter for converting analog image signals into digital density signals, said analog image signals being picked up by scanning said surface of said inspected material;

(b) a tabulator for storing and supplying a density tone conversion table which is used to convert said digital density signals within a pre-set density range including at least the background density of said web material into a constant digital density signal corresponding to a constant density;

(c) a density converter for converting said digital density signals into converted signals by referring to said density tone conversion table; and

(d) a display monior for displaying an image using said converted digital signal.

The digital density signals are converted by means of the density tone conversion table. In this conversion process, the density signals within constant range containing therein a density signal corresponding to the background are converted into a constant pre-set density signal, so that each density signal is thus deprived of the noise signal corresponding to the background. Accordingly, noise signal components are not displayed in the graphic representation of the image to facilitate eacy discrimination of the defective portions.

Although the density tone conversion table stores a single table, it is desirous that the backgound density range or other parameters of the conversion table may be changed, either manually or automatically, so that the material under inspection is processed in the best mode. Alternatively, the tabulator stores plural density conversion tables so that a proper conversion table may be selected, preferably automatically, from the stored plural tables in consideration of the characteristics of the test piece to be inspected. As the parameters are automatically changed or the used table is selected, the background density range may be determined by calculating the density histogram within the pre-set image range.

The second object of the invention is achieved by the provision of a defect inspection system for scanning a surface of an inspected material to pick up image signals from which any defects are detected, which comprises:

(a) an A/D converter for converting analog image signals into digital density signals, said analog image signals being picked up by scanning said surface of said inspected material;

(b) a tabulator for storing and supplying a density tone conversion table which is used to convert said digital density signals within a pre-set density range including at least the background density of said inspected material into a constant digital density signal corresponding to a constant density;

(c) a density converter for converting said digital density signals into converted density signals; and

(d) defect detection means for comparing said converted density signals with at least one pre-set threshold to detect defects.

The digital density signals are converted by means of the density tone conversion table. In this conversion process, the density signals within constant range containing therein a density signal corresponding to the background are converted into a constant pre-set density signal, so that each density signal is thus deprived of the noise signal corresponding to the background. Accordingly, the reliability and sensitivity in defect defection operation are improved.

Moreover, by spatial-filtering each signal, which has been processed through the density conversion, the outline of the portion of each image indicating the presence of a defect is enhanced or sharpened to further improve the sensitivity and/or reliability of the inspection operation. Since the noises in the background area have been already eliminated by the preceding density conversion processing, there is no fear that the noises are intensified by this spatial-filtering process. Furthermore, by smoothing the image signals after the processing thereof through spatial-filtering by means of the differentiation filter, undesired pick-up of noise signals can be further decreased to further improve the sensitivity and/or reliability of the inspection operation.

It is convenient that the image signals processed through the density converter may be displayed on a monitor display tube so that the defects can be visually observed.

The third object of the invention is achieved by the provision of a defect inspection system for scanning a surface of an inspected material to pick up image signals from which any defects are detected, which comprises:

(a) an A/D converter for converting analog image signals into digital density signals, said analog image signals being picked up by scanning said surface of said inspected material;

5

(b) an spatial filter for spatial-filtering said digital density signals through a differentiaion filter; and

(c) defect detection means for comparing the filtered density signals with a pre-set threshold to detect defects.

As the image density signals have been converted into digital signals which have been differentiated through the differentiation filter, acute or large peak portions having high output levels of the signal, namely the low frequency components, of the signal wave are decreased. As a result, the output level of the signal wave corresponding to the background is kept at a substantially constant output level. By comparing the thus differentiated signal to a pre-set threshold, any defect can be detected reliably.

A density converter for converting the image signals, which has been processed through the A/D converter, may be provided so that the digital image signals are converted through a selected density conversion table and then the thus processed signals may be put into the spatial filter. It is desirous that the density conversion table is selected such that the signals within a certain density range including at least the background density are converted into a constant density signal. It is also desirous that the differentiation filter used for the spatial-filtering processing may be exchanged so that the selected filter is well adapted to the inspection of particular material and the background of the surface thereof.

The fourth object of the invention is achieved by the provision of a defect inspection system for scanning a surface of an inspected material to pick up image signals from which any defects are detected, which comprises:

(a) a memory for storing plural inspection data sets, each inspection data set determining plural conditions for carrying out inspection of said inspected material; and

(b) a selector for selecting one inspection data set so that said inspected material is subjected to inspection under the selected inspection conditions.

Each inspection data set stored in the memory may be a data set stored for each of the materials to be inspected, a data set stored for each of the conditions for inspection, or a data set stored for determining both of the particular kind of the inspected material and the condition for inspection. A suitable data set may be selected by manual operation, or a suitable set identifying a particular material and defining a particular inspection condition may be selected by an automated operation by automatically discriminating the particular material and the particular inspection condition.

By selecting a proper one inspection data set adapted for the inspection of a particular kind of the inspected material under a particular inspection condition, the optimum conditions for inspection (including the threshold and other parameters) can be put into the processing system by a single operation. The siagnals are subjected to sequential processing line using the thus selected inspection data set to detect any defects contained in the inspected material.

The fifth object of the invention is achieved by the provision of a defect inspection system for scanning a surface of a web material to pick up image signals from which any defects are detected, said web material having a joint seam, which comprises:

(a) a joint area detector for detecting a joint area including a joint seam of said web material;

(b) a memory for storing separately a first threshold for the inspection of said joint area and a second threshold for the inspection of the area other than said joint area, said first threshold being set not to detect any defects and said second threshold being set to detect any defects;

(c) a selector for selectively reading out said first threshold when said joint area is inspected and reading out said second threshold when the area other than said joint area is inspected; and

(d) a defect discriminator for comparing said image signals with the selected threshold to detect the defects.

The joint area detector may comprises a joint area sensor pair including an upstream sensor for sensing the leading margin of said joint area to feed a first joint signal and a downsream sensor for sensing the terminating margin of said joint area to feed a second joint signal, said selector selecting said first threshold upon receipt of said first joint signal and selecting said second threshold upon receipt of said second joint signal.

Otherwise, the joint area detector may comprise an upstream sensor for sensing the leading margin of said joint area to feed a leading margin sensing signal, said selector selecting said first threshold upon receipt of said leading margin sensing signal and keeping to select said first threshold until a pre-set length of said web material passes beneath said upstream sensor.

Upon detection of the joint seam by the joint area detector as the web material is passed therebeneath, the threshold for the discrimination of defects is reset to a shifted threshold different from the value set for scanning of the portion other than the joint area, so that the pre-set area (joint area) including the joint seam is inspected while keeping the threshold for the discrimination of defects at said shifted threshold. Accordingly, the defects each having an extension smaller than a certain area and/or a depth less than a certain depth are neglected. Such a reset threshold may be a sufficiently high level (or sufficiently low level) to prevent defects within the joint area from being detected. As a result, major portions or even all of the defects within the joint area are not detected, so that the web material is not judged as it is defective in its entirety due to the presence of any defects found in the joint area.

The sixth object of the invention is achieved by the provision of a defect inspection system for scanning a surface of a web material to pick up image signals from which any defects are detected, said web material being inspected along plural splitted lanes extending along the lengthwise directtion, which comprises:

(a) a lane discriminator for discriminating the scanned lane;

(b) a memory for storing separately plural inspection data sets for respective lanes;

(c) a selector for reading out respective inspection data sets correspondingly for respective lanes; and

(d) a defect discriminator for comparing said image signals with the selected inspection data sets to detect the defects.

Plural inspection data sets may be stored in the memory, each data set corresponding to at least either one of the data for identifying said web material or the data for defining the condition of the web material. Otherwise, the memory stores a single data set for defining a condition not to detect any defects within one lane.

The surface area of the web material under inspection may be divided into plural blocks, in lieu of splitting the same into pulral lanes as aforementioned, and plural inspection conditions are memorized or stored in the memory for carrying out inspection of respective blocks. One inspection condition for each of the inspected blocks is selectively read out from the thus stored plural conditions.

In the last mentioned embodiment of the system of the invention, the lane (or block) discriminator discriminates the particular lane (or block), which is scanned just now, from plural separate imaginal lanes (or blocks) to be successively scanned along the main scanning direction. After the particular lane, which is now scanned along the main scanning direction, is discriminated, the parameters (including, for example, the threshold) suitable for the inspection of the particular lane (or block) are read from the memory. Using the selected parameters, inspection of the particular lane (or block) is carried out.

BRIEF DESCRIPTION OF THE DRAWING:

Fig. 1 is a block diagram showing the operation sequence processed through the first embodiment of the invention, the structure of the web feeding unit being partly and diagrammatically shown;

Fig. 2 is a graphic representation of the input and output density signal curves processed through the first embodiment, an exemplary density tone conversion table being also shown;

Fig. 3 is a block diagram showing the operation sequence processed through the second embodiment;

Fig. 4 is a graph showing the histogram used in the second embodiment;

Fig. 5 is a schematic illustration showing the spatial-filtering process carried out in the second embodiment;

Fig. 6 is a schematic illustration showing an example of the differentiation filter;

Fig. 7 is a block diagram showing the operation sequence processed through the third embodiment;

Fig. 8 is a schematic illustration showing one example of smoothing processing;

Fig. 9 is a block diagram showing the operation sequence processed through the fourth embodiment;

Fig. 10 is a block diagram showing the operation sequence processed through the fifth embodiment of the invention, the structure of the web feeding unit and the image sensor being partly and diagrammatically shown;

Fig. 11 shows graphs showing the output signal waves, including the image density signal, processed in the fifth embodiment;

Fig. 12 shows an example of the density conversion tables used in the fifth embodiment;

Fig. 13 is a block diagram showing the operation sequence processed through the sixth embodiment of the invention, the structure of the web feeding unit and the image sensor being partly and diagrammatically shown;

Figs 14A to 14F are schematic illustraions showing the surfaces of some sorts of web material

Fig. 15 is a block diagram showing the operation sequence processed through the seventh embodiment of the invention, the structure of the web feeding unit and the image sensor being partly and diagrammatically shown;

Fig. 16 shows a table in which a few sets of condition for practical inspection carried out by the use of the seventh embodiment is exemplarily tabulated;

Fig. 17 is a block diagram showing the operation sequence processed through the eighth embodiment of the invention, the structure of the web feeding unit and the image sensor being partly and diagrammatically shown;

Fig. 18 shows a table in which a few sets of condition for practical inspection carried out by the use of the eighth embodiment is exemplarily tabulated;

Fig. 19 is a block diagram showing the operation sequence processed through the ninth embodiment of the invention, the structure of the web feeding unit and the image sensor being partly and diagrammatically shown;

Fig. 20 shows a table in which a few sets of condition for practical inspection carried out by the use of the ninth embodiment is exemplarily tabulated; and

Fig. 21 shows a part of a web material which is splitted or divided into plural lanes or blocks.

## DESCRIPTION OF PREFERRED EMBODIMENTS:

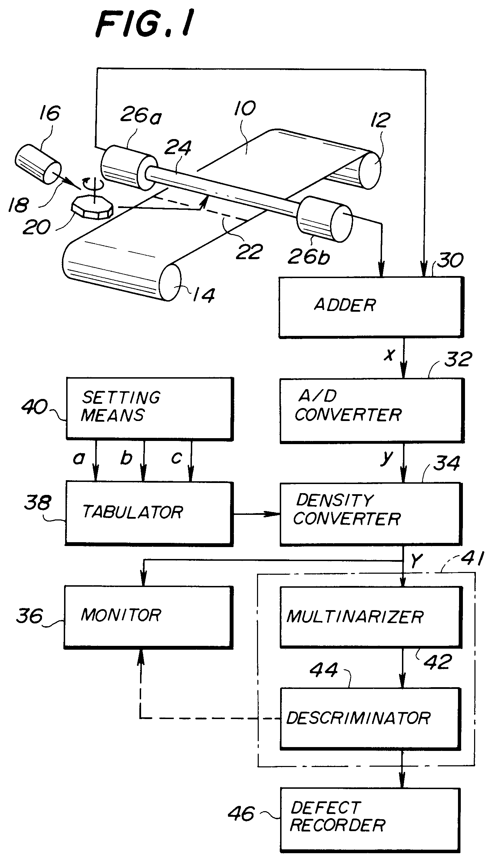

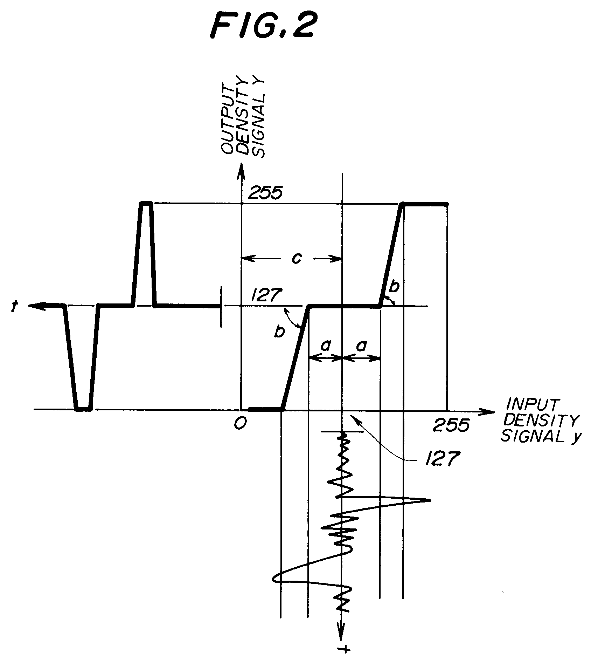

Fig. 1 is a block diagram showing the operation sequence processed through the first embodiment of the invention; and Fig. 2 is a graphic representation of the input and output density signal curves processed through the first embodiment, an exemplary density tone conversion table being also shown.

This embodiment is a system wherein an appropriate table is selected, or the table is exchanged, by manual operation while visually inspecting the image signals displayed on a monitor.

Referring to Fig. 1, a web material (test piece) 10 to be inspected, for example, a steel plate, plastics film or paper, is paid out from a supply roller 12 to be wound around a take-up roller 14. Reference numeral 16 designates a laser beam source. The laser beam 18 fed from the laser beam source 16 is reflected by a polygonal mirror 20 to be projected along a main scanning line 22 so that the web material 10 is scanned along the main scanning line 22 in the direction, for example, from the left to the right in the Figure. A beam guide rod 24 is disposed and extending opposite to the main scanning line 22, so that the beam 18 reflected by the surface of the inspected material 10 enters into the beam guide rod 24. Photo-multipliers 26 (26a, 26b) are attached to the ends of this beam guide rod 24 to detect the intensity of the reflected beam entering into the beam guide rod 24.

The outputs from the photo-multipliers 26a, 26b are passed through a preamplifier (not shown) to an adder 30 where they are added to obtain an analog image signal x. This analog image signal x is a density signal which corresponds to the characeristics or condition of the surface or internal portion of the inspected web materail 10.

The analog signal x, is converted by an A/D converter 32, into a digital density signal y as having a certain tone or graduation (for example, the tone being one of 256 density graduations). The density tone of the density signal y is then converted by means of a density converter 34 and displayed as a density-converted image on a television monitor tube 36. The density tone convsersion is effected, for example, by using a density conversion table stored in a tabulator 38. This table has the characteristics shown in Fig. 2. In Fig. 2, the abscissa denotes the density of the input density signal y, and the ordinate denotes the output signal Y after subjected to density conversion. Each of these density signals y and Y has 256 tone graduations. In this Table, the densities within a range extending to cover a pre-set width 2a, the center line of said pre-set width 2a corresponding to the background density (the background density takes a intermediate value of 256 graduations), are converted into a certain constant density (e.g. the 128th graduation), and the densities out of said range are converted into either one of the maximum value (255th graduation) or the minimum value (0th graduation) by the use of a conversion factor b.

In the illustrated embodiment, the pre-set values a, b, and c are shiftable by means of a manually operable setting means 40. Thus, the operator of the system operates the setting means 40 while monitoring the converted image displayed on the television monitor tube so that the noise signals contained in the background field are compensated.

The converted density signals obtained by processing through density convertion operation are fed to a multinarizer 42 where they are compared with a pre-set threshold to be multinarized, typically binarized, whereby a signal indicating the presence of any defect (this signal being referred to as "defect signal") is put out when it is discriminated that any one of the signals is larger or smaller than the pre-set threshold. Namely, defect detection means 41 comprises the multinarizer 42 and the discriminator 44. The terminology "multinarization" used throughout the specification means a data processing for classifying or assorting the data (density signals) using at least one threshold so that the data more than the used threshold are classified into one group and the data less than the used threshold are classified into another group. When the data are classified by the use of a single threshold, such processing is described as "binarization". The processing units used for carrying out multinarization and binarization are described as "multinarizer" and "binarizer". The discriminator 44 may be the means for detecting any defect to put out a defect signal when the multinarized density signals obtained by scanning a certain image area contain output density signals each having an output level higher than a pre-set level at a frequenccy more than a pre-set frequency. The result of discramation operation is recorded in a defect recorder 46 together with the address data indicated by the co-ordinates. The defect signal may be fed to another separate processor to be subjected to subsequent processing sequence which differs from the processing sequence described herein. The multinarized image signals within a certain area, including the portion which is discrimianted as forming the defect by the defect detection means 44, may be displayed as an image on the monitor 36.

(Second Embodiment)

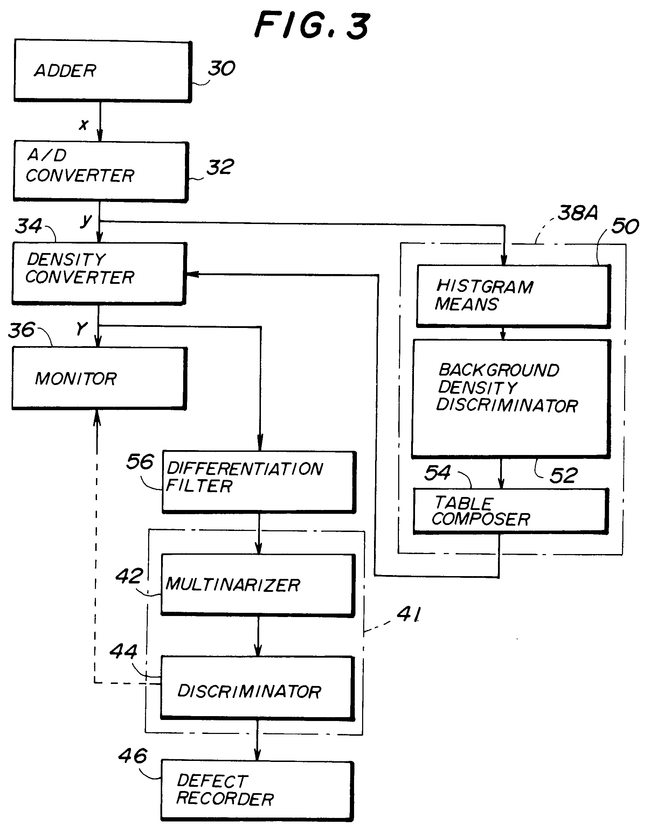

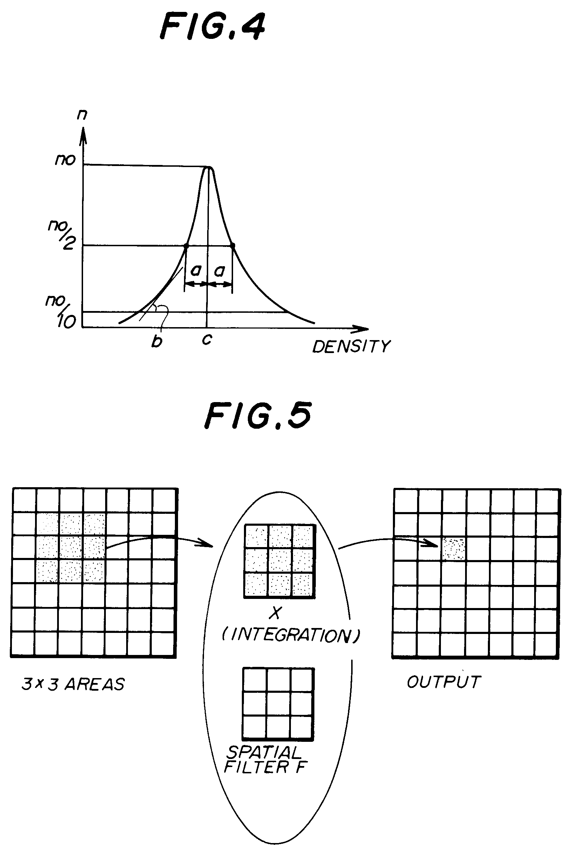

Fig. 3 is a block diagram showing the operation sequence processed through a second embodiment; and Fig. 4 is a graph showing the histogram used in the second embodiment. This embodiment has a tabulator 38A which supplies automatically a table for setting the threshold for the discrimination operation by referring to a histogram drawn by plotting the distribution of density signals (the histogram being referred to simply as "density histogram"). In detail, the tabulator 38A of this embodiment comprises histogaram means 50 for drawing a density histogram, as shown in Fig. 4, of the density signals $y$ within a certain image area, for example the density signals $y$ along a certain scanning line, based on the A/D converted density signals $y$. A background density discriminator 52 determines a background density $c$, which is the density appearing at the maximum frequencty, by referring to the histogram. The values $a$ and $b$, which have been mentioned in the description of Fig. 2, may also be determined from this histogram. For instance, the value $a$ corresponding to the range of the noise level contained in the background and the value $b$ corresponding to the density level distribution are obtained with reference to the degree of distribution of densities of respective signals. The value $a$ may be obtained, for example, from the density range in which the frequency distributes from the maximum frequency $n_0$ to the frequency $n_0/2$ (half value of the maximum frequency), and the value $b$ may be, for example, the mean or maximum gradient of the curve extending from the point where the frequency takes the value of $n_0/10$ to the point where the freqency takes the value $n_0/2$.

As the vlaues $a$, $b$ and $c$ are determined, the a table composer 54 determines the pattern for the conversion table based on the values $a$ and $b$, and then the thus determined pattern is moved in parallel to the direction from the right to the left as viewed in Fig. 2 so that the value $c$ is coincident with the value corresponding to the background density level of the pattern. Then, the conversion table determined as aforementioned is fed to the density converter 34 where the input density signal $y$ is converted by referring to the conversion table to obtain the converted density signal $Y$ which is displayed as a converted image on the television monitor 36. Alternatively, the values $a$ and $b$ are set to take constant values which are combined with the value $c$ determined from the histogram to form a conversion table.

The density signal $Y$ is subjected to spatial-filtering process by a differentiation filter 56 so that the contour of the detected defect is enhanced and clarified. This process is carried out by covering 3 x 3 picture elements, the center being the picture element now being processed, by a spatial filter F to obtain the integrated products each for respective picture elements and then an output is obtained by totalizing all integrated products. Similar processing operations are repeated following the sequential raster scanning from the leftmost picture element in the top line to the rightmost picture element in the bottom line.

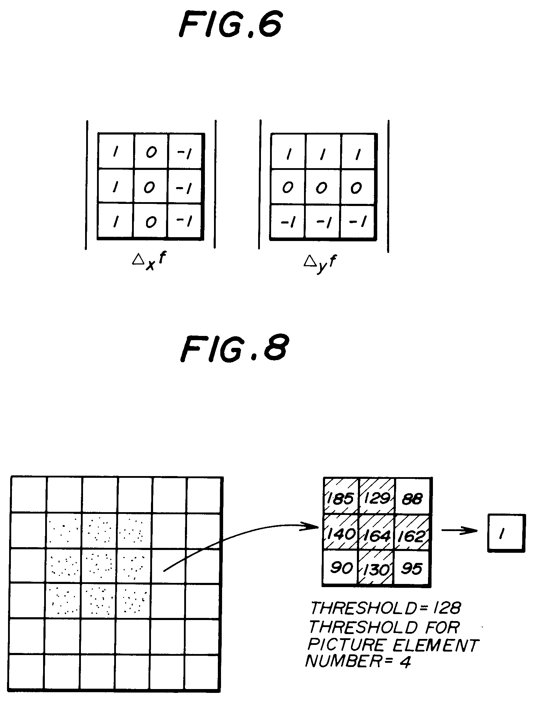

For example, a filter having overlap factors as shown in Fig. 6 may be used as the spatial filter used for the spatial-filtering operation. This filter comprises paired two filters, i.e. a filter $\Delta_x f$ for differentiating along the line direction and another filter $\Delta_y f$ for differentiating along the row direction; and the sum of the absolute values of the outputs from both filters or the output from either one of these filters having a larger value is used as the final output.

As an advantageous result of this filtering process, the contour of each image along both of $x$ and $y$ directions is enhanced and clarified to improve the defect detection sensitivity carried out by the subsequent multinarizer 42. In addition, since the noises in the background area are eliminated or compensated by the density converter 34, there is no fear that the noises are intensified by this filtering process.

(Third Embodiment)

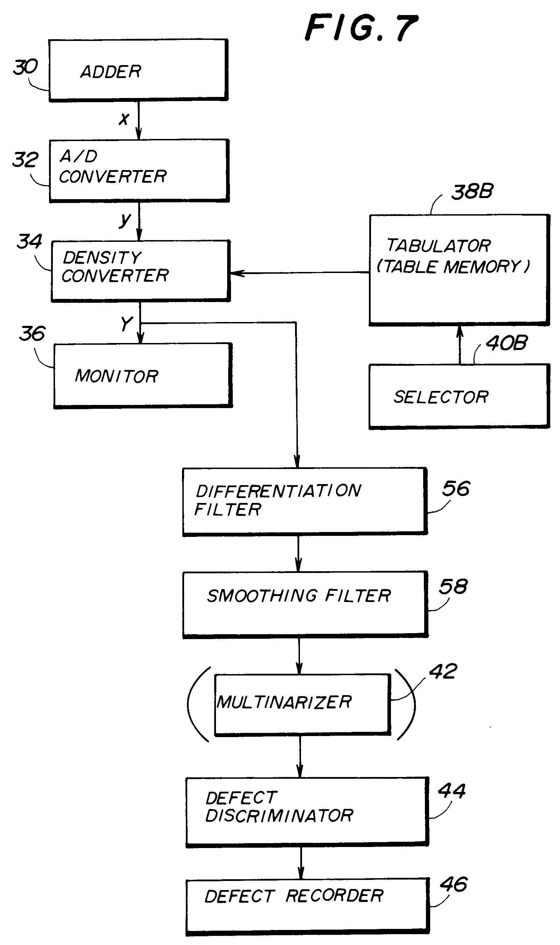

Fig. 7 is a block diagram showing the operation sequence processed through a third embodiment. This embodiment comprises a tabulator (table means) 38B having a memory (table memory) for storing therein plural density tone conversion tables having different patterns, and a selector 40B for selecting a proper table by manual operation. In detail, the operator may designate a proper conversion table which is suited for the processing of the web material to be inspected in consideration of the kind and condition of the material, or a suitable conversion table may be selected by manual operation so that noise signals disappear from the background to facilitate finding of defects while visually monitoring the images displayed on the television monitor 36.

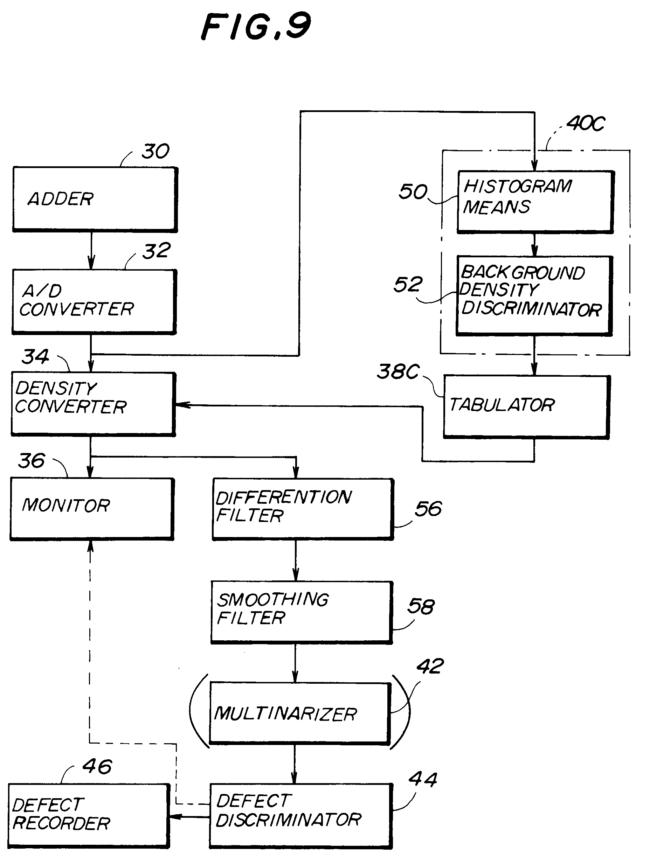

In the illustrated embodiment, each density signal is also multinarized through a differentiation filter 56 and a smoothing filter 58. The smoothing filter 58 removes isolated noise signals which have not been eliminated by the density tone converter 34 and differentiated by the differentiation filter 56 to be clarified, thereby to further clarifying the distiction between the background and the defects. In the illustrated embodiment, this smoothing process comprises the step of providing a window having dimensions of 3 x 3, as shown exemplarily in Fig. 8, which covers picture elements including a center picture element to be scanned at each scanning cycle, and comparing the densities of images of nine picture elements with a pre-set density threshold (for example level 128). When the number of picture elements each giving a density higher than the pre-set threshold is more than a pre-set number (for example 4), the value of the center picture element under inspection is set to 1; whereas the number of picture elements each giving a density higher than the pre-set threshold for picture element is not more than 4, the value of center picture element is set to 0. Thus, each image signal has been binarized.

Although the smoothing filter shown in Fig. 8 is used to compare the density of each image signal with a pre-set threshold thereby to effect smoothing and binarization concurrently. However, smoothing and multinarization may be effected by separate operations. For example, a median value within the image densities of respective picture elements contained in the window shown in Fig. 8 may be taken as the image density of the center picture element under inspection (by using a median filter), or the mean value of the image densities of respective picture elements may be taken as the image density. In such a case, it becomes necessary to process the image sensity signal further through a multinarizer 42.

(Fourth Embodiment)

Fig. 9 is a block diagram of a fourth embodiment. In this embodiment, selection of a suitable conversion table as carried out by the selector 40B in the preceding embodiment shown in Fig. 7 is effected by an automated operation. In detail, a selector 40C is provided, which comprises histogram means 50 which has been described previously with reference to Figs. 3 and 4, and a background density discriminator 52 for determining at least the suitable value of the background density $\underline{c}$. A conversion table for setting the conditions closest to those determined by the background density discriminator 52 is selectively read out from a tabulator 38C in which plural tables are stored, and then the density conversion is effected by using the thus selected table.

As will be seen from the foregoing, since the densities within a constant range containing therein the background density are converted into a constant density in each of the first to fourth embodiments, noise signals contained in the background can be removed so that defects can be reliably discriminated without being affected by the presence of noise signals. Furthermore, since the noise signals contained in the background can be removed, defects can be detected visually at high reliability by monitoring the images displayed on the television monitoring tube.

(Fifth Embodiment)

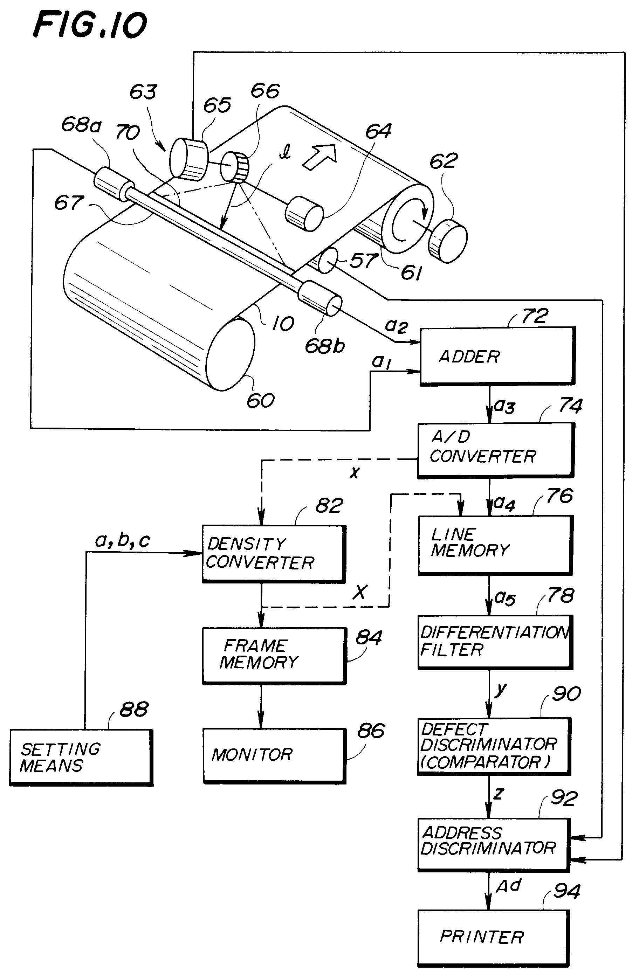

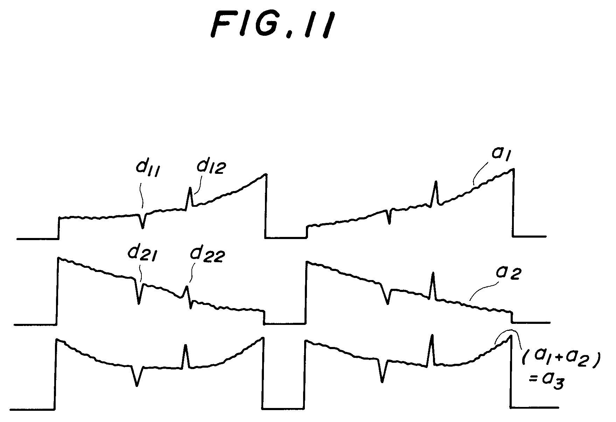

Fig. 10 is a block diagram of fifth embodiment of the invention; and Fig. 11 is a graphic representation showing the wave forms of the output and related signals.

Referring to Fig. 10, a web material (test piece) to be inspected by this fifth embodiment is supplied from a feed roller 60 and fed to a take-up roller 61. The take-up roller 61 is driven by a take-up motor 62. As the web material 10 is continuously fed, the surface image is read by an image sensor 63 of a so-called flying spot scanning. The image sensor 63 feeds or projects a scanning beam $\ell$ composed of a laser beam supplied from a laser beam source 64 through a rotary mirror (polygonal mirror) 66 which is rotated by a motor 65 to scan the web material 10 along a main scanning direction, which extends along the width direction of the web material 10, at a constant angular rate; and at the same time the reflected light reflected by the surface of the web material 10 is received by a light receiving rod 67 and the thus received light is guided to a pair of photo-sensors 68 (68a, 68b). Namely, the light receiving rod 67 is disposed vicinal to the main scanning line 70 for the scanning beam $\ell$ to extend parallel to the main scanning line 70 so that the reflected light beam from the surface of the web material 10 is totally reflected by the internal surface of the light receiving rod 67 to be guided to the rod ends where the quantity of received light is determined by photo-receivers 68, such as photo-multipliers. The image signal received by each of the photo-receivers 68 is amplified by a pre-amplifier and a main amplifier, and then the wave form thereof is shaped to form analog image signals $a_1$, $a_2$ shown in Fig. 11. Image signals $a_1$, $a_2$ obtained by scanning along adjacent main scanning lines 70 appear in the form of cyclically appearing waves distributed along the axis (abscissa in Fig. 11) showing the lapse of time. Peaks $d_{11}$, $d_{12}$, $d_{21}$ and $d_{22}$ of the curve in Fig. 11 indicate defects present on the surface of the web material 10.

The level of each of the signal waves $a_1$, $a_2$ is gradually changed such that the level is lowered as the location along the main scanning line 70 for the scanning beam $\ell$ moves remoter from the center of the main scanning line 70 whereas the level is raised as the scanned location moves closer to the center of the main scannig line 70. To remove the influence by the change in scanned location along the main scanning line 70, the signals $a_1$, $a_2$ are added together by an adder 72, according to one aspect of this embodiment, to obtain a signal $a_3$. As will be seen from Fig. 11, the output level of each one cycle segment of the signal wave $a_3$ is significantly arcuated due to the influences by the change in incident angle of the scanning beam $\ell$ on the surface of the web material 10, unevenness of the surface of the web material 10 due to the texture thereof and the attenuation occurred internally of the guide rod 66.

The signal $a_3$, which is the product of addition, is converted into a digital signal $a_4$ by means of an A/D converter 74. For example, the converted signal $a_4$ is a density signal $a_4$ having 256 tone graduations, and stored in a line memory 76.

The line memory 76 has a memory capacity at least equivalent to the product (N x n) obtained by multiplying the number N of picture elements contained in one main scanning line by the number n of lines contained in the used spatial filter, which will be described in detail hereinafter. The line memory 76 stores digital image signals $a_4$ for every scanning operations, the storing of the signals being effected in synchronism with feeding of inspection width gate signals. Namely, the line memory 76 has a so-called ring buffer structure so that a new datum is written on the earliest datum as all of the memory areas in the line memory 76 have been filled. The inspection width gate signal indicates the width of the web material 10 inspected or scanned by a single scanning cycle, and is generated in synchronism with the rotation of the rotary mirror 66. The line memory 76 may be replaced by a delay circuit for delaying the signals $a_3$ by n lines, delaying being carried out serially one line for every scanning operation along the main scanning line.

The line memory 76 puts out a signal $a_5$ which is fed to a differentiation filter 78 where the signal is subjected to spatial-filtering. Similarly as in the second embodiment, nine (3 x 3) picture elements including a center picture element now on inspection is covered by an area filter F, as shown in Fig. 5, to obtain the integration product of signals from these nine picture elements so that the total sum is taken as the output. Similar operations are repeated from the top left picture element to the right bottom picture element following to the order of raster scanning.

Similar to the second embodiment, a filter having overlap factors as shown in Fig. 6 may be used as the spatial filter used for the spatial-filtering operation. This filter comprises paired two filters, i.e. a filter $\Delta_x f$ for differentiating along the line direction and another filter $\Delta_y f$ for differentiating along the row direction; and the sum of the absolute values of the outputs from both filters or the output from either one of these filter having a larger value is used as the final output.

As an advantageous result of this filtering process, the contour of each image along both of x and y directions is outlined distinctively to improve the reliability and sensitivity in defect detection carried out by subsequent processings. In a further modified embodiment, a density converter 82 may be provided for converting the density of the signal, after it is subjected to A/D conversion, using a pre-set density conversion table. The signal, which has been subjected to density conversion processing, is fed through the line memory 76 to a differentiation filter 78 serving as the spatial filter where the signal is subjected to spatial-filtering process.

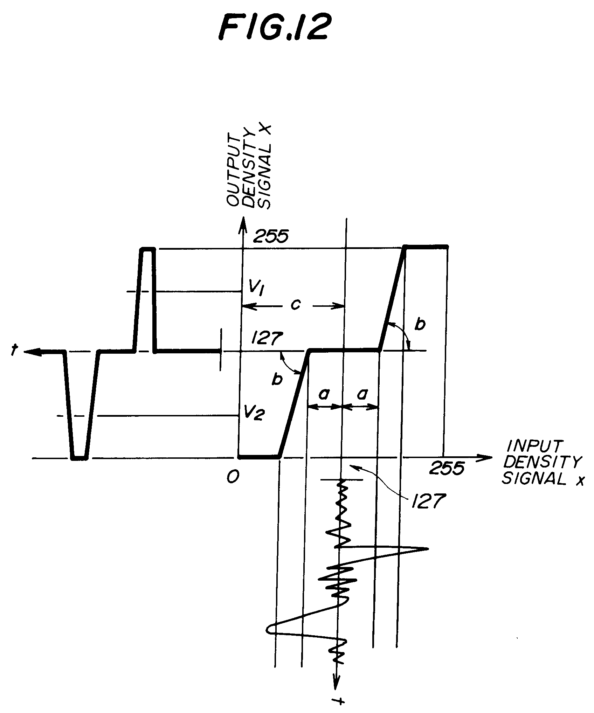

In case where the signal is processed through the density converter 82, the signal $a_4$ obtained through A/D conversion is fed to a density converter 82 where it is subjected to density conversion. The output signal from the density converter 82 is once passed to a frame memory 84 to be stored and then displayed as a converted image on a television monitor 86. The density tone conversion is effected, for example, by using a table having the characteristics shown in Fig. 12. In Fig. 12, the abscissa denotes the density of the input density signal x, and the ordinate denotes the output signal X after subjected to density conversion. Each of these density signals x and X has 256 tone graduations. In this table, the densities within a range extending to cover a pre-set width 2a, the center line of said pre-set width 2a corresponding to the background density level c, are converted into a certain constant density (e.g. the 128th graduation), and the densities out of said range are converted into either one of the maximum value (255th graduation) or the minimum graduation (0th graduation) by the use of a conversion factor b.

In the illustrated embodiment, the pre-set values a, b, and c are shiftable by means of a manually operable setting means 88. Thus, the operator of the system operates the setting means 88 while monitoring the image displayed on the television monitor 86 so that the noises contained in the background field are eliminated.

On the other hand, the signal $y$ obtained by subjecting to spatial-filtering through a differentiation filter 78 is deprived of a low frequency components contained in the signal X or $a_4$, whereby the defective portion is made distinctive. A defect discriminator (comparator) 90 is provided to compare this signal $y$ with a threshold $v$ ($v_1$, $v_2$) and the portion or surface area of the web material is discriminated as defective when $y > v_1$ or $y < v_2$ (see Fig. 12).

In lieu of discriminating the defect by the use of the threshold $v_1$ or $v_2$ relating to the density of the image, any defect may also be discriminated by setting a threshold relating to the number of picture elements. For instance, a certain inspected picture element is sorted as having a value of 1 when the number of picture elements each having a density more than the threshold $v_1$ or a density less than the threshold $v_2$ is more than a pre-set number (for example, 4 in the example shown in Fig. 8), whereas the inspected picture element is sorted as a value of 0 when the number of picture elements each having a density more than the threshold $v_1$ or a density less than the threshold $v_2$ is not more than the same pre-set number.

The defect discriminator puts out a signal $z$ indicating any defect, and this signal $z$ is fed to an address discriminator 92 to determine the address Ad of the defect. This address Ad may be determined by the combination of the output from a feed rate sensor (pulse generator) 57 and a rotating angle of a motor 65. However, since there is some time delay required for the processing of the signals, such a time delay must be taken into account when the address Ad is determined. For example, the ordinates of each signals are stored together with the signals $a_4$ and $\overline{X}$ in the line memory 76 and the frame memory 84, so that the ordinates of each defect can be read from these memories 76 and 84. The results are recorded in recording means, such as a printer 94.

Although each image signal is compared with the thresholds $v_1$ and $v_2$ by the defect discriminator 90 used in this embodiment, each image signal may be compared with more than two thresholds to discriminate the particular kind and extension of the defect simultaneously, or only one threshold may be used for the discrimination.

(Sixth Embodiment)

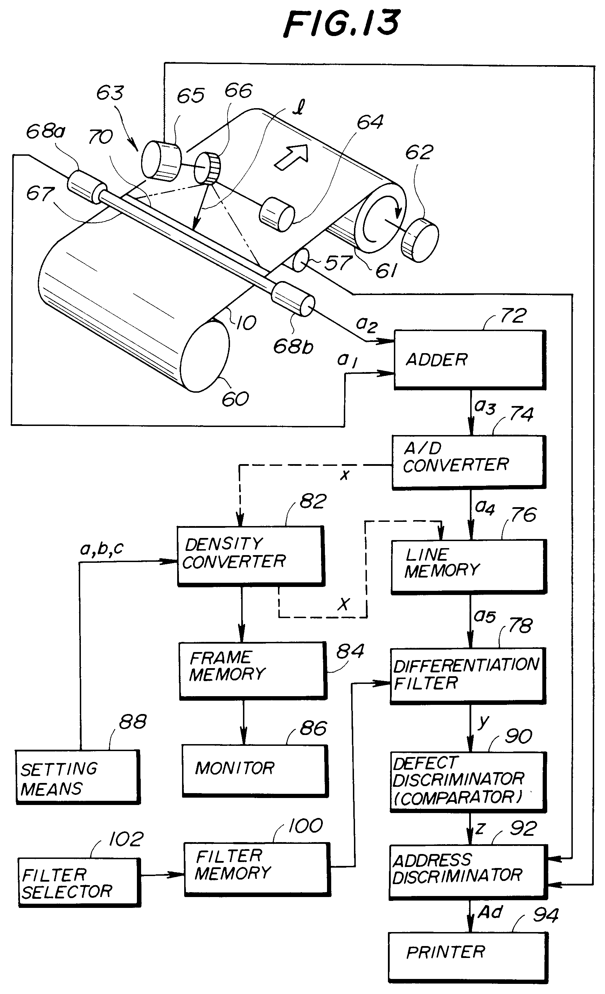

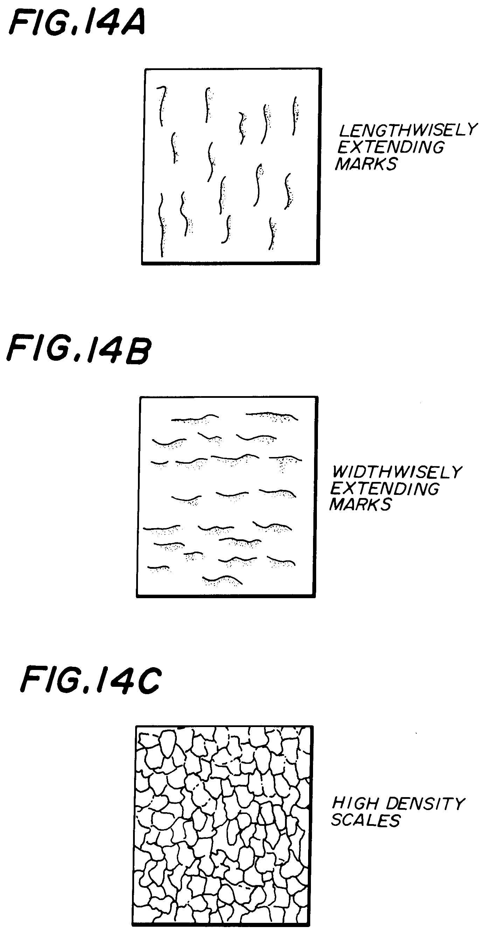

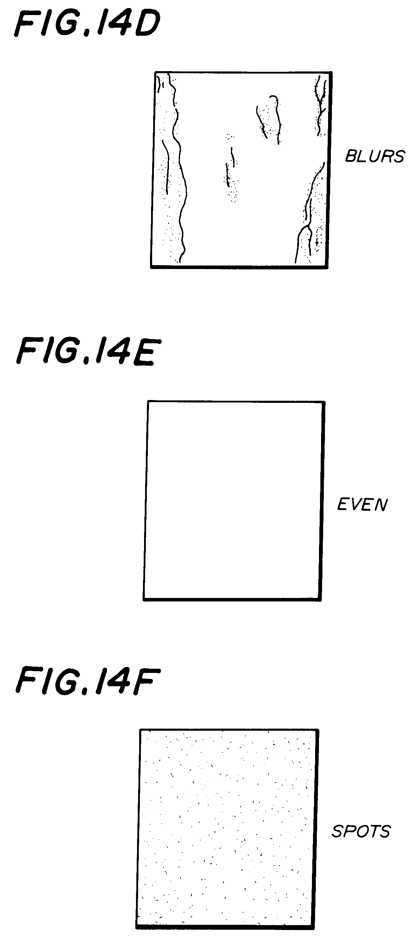

Fig. 13 is a block diagram showing the operation sequence processed through a sixth embodiment of the invention; and Figs 14A to 14F are schematic illustraions showing the background surfaces of representative web materials (i.e. inspected material).

The background textures illustrated in Figs. 14A to 14E appear typically in the typical examples set forth in the following Table 1.

Table 1

| Identification of Background (Texture) | Typical Example |
|---|---|
| Fig. 14A | Aluminum |
| Fig. 14B | Plated Material |
| Fig. 14C | Plated Material (Spangle) |
| Fig. 14D | Hot-rolled Steel Plate |
| Fig. 14E | Cold-rolled Steel Plate |

This embodiment is characterized in that different differentiation filters are selectively used in compliance with the particular background condition to be inspected. Referring to Fig. 13, reference numeral 100 designates a filter memory for storing plural differentiation filters for differentiating along different directions or having different number thresholds or different mask sizes. In addition to the examples shown in Fig. 6, where the mask has dimensions or mask sizes or thresholds of 3 x 3, number threshold masks of 5 x 5, 7 x 7, etc. are stored, together with the differentiation filters $\Delta_x f$ and $\Delta_y f$ for differentiating along the line direction (X) and along the row direction (Y), respectively.

The memory 100 comprises a differentiation filter table (Table 2) for storing the combinations of four 3 x 3 filters having different differentiation directions and different weighting factors, and a inspection condition table (Table 3) for storing plural mask sizes and other conditions for inspection, such as the thresholds v. The particular combination of these conditions to be used for the inspection of particular web material is selected by a selector 102.

12

Table 2

| Differentiation Filter Table | |
|---|---|
| Table No. | Combination |
| No.1 | $\Delta_x f$, Factor $\overline{a}$ |
| No.2 | $\Delta_y f$, Factor $\overline{b}$ |
| No.3 | $\Delta_x f + \Delta_y F$, Factor $\overline{c}$ |
| No.4 | $\Delta_x f + \Delta_y f$, Factor $\overline{\underline{d}}$ |

Table 3

| Inspection Condition Table | | | |
|---|---|---|---|
| Table No. | Differentiation Filter No. | Mask Size Defining Number of Thresholds | Threshold |
| No. 1 | No.1 | 5 x 5 | 16 |
| No. 2 | No.3 | 3 x 3 | 7 |
| -- | -- | --- | -- |
| -- | -- | --- | -- |
| -- | -- | --- | -- |
| No. 16 | No.2 | 5 x 5 | 22 |

For example, when the inspection condition table No. 1 is selected from Table 3, No. 1 filter is selected from the differentiation filter table, the mask size is set to 5 x 5, and the threshold used in the defect discriminator 90 is set to 16.

In case where the background (due to the texture of inspected material) is changed along some direction or otherwise the background has a certain directivity, it is generally preferable to effect differntiation along that direction; whereas it is preferably that two-dimensional differentiations are effected in case where the background pattern has no directivity. It is desirous that a large size mask, e.g. 5 x 5 or 7 x 7 size mask, is used when the extension (or width) of the background is large or when patterns of the texture is coarse. In practice, a proper condition or table should be selected after monitoring the image on the image monitoring device 86 to clearly grasping the directivity and area of the background pattern of the material. The inspection condition table may be selected, by the use of automated means, to use a pre-set table by designating the web material (test piece) to be inspected.

Table 4 shows the passing rate of respective background patterns shown in Figs. 14A to 14E when inspected by the system of this invention, the passing rate according to a conventional system being also shown for comparison purpose.

The conventional system set forth in Table 4 is a system which comprises an image sensor and an adder, which are similar to the image sensor 63 and the adder 72 shown in Fig. 10, and in which the output obtained by filtering the signal $a_3$ through an analog differentiation filter is compared with a pre-set threshold to detect a defect, if any. (Model FL-9000 produced by Fuji Photo Film Co., Ltd.)

Both in the system of the invention and the conventional system, the thresholds were set to the optimum conditions (that is, the condition for obtaining the maximum passing rate for respective systems). The passing rate is defined as follows:

a: Number of samples from which only the significant defects were detected;

b: Number of samples giving erroneous results not only that significant defects were detected but also that some background portions were erroneously discriminated as forming defects;

c: Number of samples giving erroneous results that significant defects were not detected but some background portions were erroneously discriminated as forming defects;

d: Number of samples from which no defects were discriminated; and

n: Total sample number (all sample containing some defect or defects (namely n = a + b + c + d).

13

$$\text{Passing Rate} = (a/n) \times 100$$
$$= \left[ a/(a + b + c + d) \right] \times 100$$

14

Table 4

| Background | Differentiation Filter | Mask Size for Defining Number of Thresholds | Passing Rate (%) When Inspected by the System of the invention | Passing Rate (%) When Inspected by a Conventional System |
|---|---|---|---|---|
| A (Aluminum Having Wide Background Pattern) | $\Delta_x^f + \Delta_y^f$ | 3 x 3 | 72 | |
| | $\Delta_x^f + \Delta_y^f$ | 5 x 5 | 78 | 75 |
| | $\Delta_y^f$ | 3 x 3 | 86 | |
| | $\Delta_y^f$ | 5 x 5 | 95 | |
| B (Plated Material Having Wide Joint Area) | $\Delta_x^f + \Delta_y^f$ | 3 x 3 | 54 | |
| | $\Delta_x^f + \Delta_y^f$ | 5 x 5 | 60 | 63 |
| | $\Delta_x^f$ | 3 x 3 | 89 | |
| | $\Delta_x^f$ | 5 x 5 | 97 | |
| C (Plated Material; Spangle) | $\Delta_x^f + \Delta_y^f$ | 3 x 3 | 64 | 45 |
| | $\Delta_x^f + \Delta_y^f$ | 5 x 5 | 82 | |
| D (Hot-rolled Steel) | $\Delta_x^f + \Delta_y^f$ | 3 x 3 | 94 | 78 |
| | $\Delta_x^f + \Delta_y^f$ | 5 x 5 | 94 | |
| E (Cold-rolled Steel) | $\Delta_x^f + \Delta_y^f$ | 3 x 3 | 98 | 85 |
| | $\Delta_x^f + \Delta_y^f$ | 5 x 5 | 98 | |

It will be seen from the results set forth in Table 4 that a differantiation filter for effecting differentiation along one direction is preferably selected when the background pattern has a certain directivity, and that two differentiation filters for effecting two-dimensional differentiation are preferably used when the background pattern has no directivity. It is also seen that a larger mask size should preferably be used when the extension (width) of the background is large or when the background pattern is coarse. Thus, the reliability

15

for the inspection of defects can be considerably improved by changing the direction along which differentiation is effected by the filter(s) depending on the directivity of the background, and by exchanging the mask size for defining the number of thresholds depending on the background pattern. Table 5 shows examples of preferable directivities of filters and preferable mask sizes adapted for proper inspection of respective backgrounds.

## Table 5

| Background | Differentiation Filter | Mask Size for Defining Number of Thresholds |
|---|---|---|
| Fig. 14A | $\Delta_y f$ | 3 x 3 (Background Has Small Width) <br> 5 x 5 (Background Has Large Width) |
| Fig. 14B | $\Delta_x f$ | 3 x 3 (Background Has Small Width) <br> 5 x 5 (Background Has Large Width) |
| Fig. 14C | $\Delta_x f + \Delta_y f$ | 5 x 5 |
| Fig. 14D | $\Delta_x f + \Delta_y f$ | No problem occurs while the mask size is either one of 3 x 3 or 5 x 5 |
| Fig. 14E or Fig. 14F | $\Delta_x f + \Delta_y f$ | No problem occurs while the mask size is either one of 3 x 3 or 5 x 5 |

As will be seen from the foregoing, since the image density signals are subjected to spatial-filtering using a differentiation filter and then the differentiated signals are compared with at least one threshold to detect defects, according to this embodiment, each of the differentiated signals which are compared with the threshold is deprived of long wave-form fluctuations (i.e. low frequency components), which are induced by the used optical system or unevenness of the surface condition of the inspected web material. As an advantageous result of such processing sequence, signals identifying defects otherwise becoming obsure due to the wave-form fluctuations can be detected at high sensitivity to improve the reliability in defect detection operation.

By subjecting the signals processed by the A/D converter to density conversion and then subjecting to spatial-filtering process, the enhancement of the noises contained in the background can be suppressed to further improve the relaiability and sensitivity. When the density conversion table used therefor has the conversion characteristics for bringing or converting the densities within a certain range including at least the background density to a constant density, the noises contained in the background may be removed satisfactorily to exclude erroneous operation thereby to further improve the reliability.

Furthermore, malfunction or erroneous operation due to the pattern of background may be eliminated by selectively using differentiation filter(s) serving as the spatial filter from plural exchangeable differentiation filters. It is also possible to store various differentiation filters having different directivities and at least one proper differentiation filter is selected to adapt for the inspection of particular web material to be inspected, or to change the mask size, or to change both of the direction of differentiation and the mask size. Such a selection operation may be effected manually, or effected automatically by designating the particulr web material to be inspected.

(Seventh Embodiment)

The following embodiment is a system for inspecting a web material as a test piece to find any defect, wherein plural different inspection conditions are selected depending on the kind and condition of the material to be inspected.

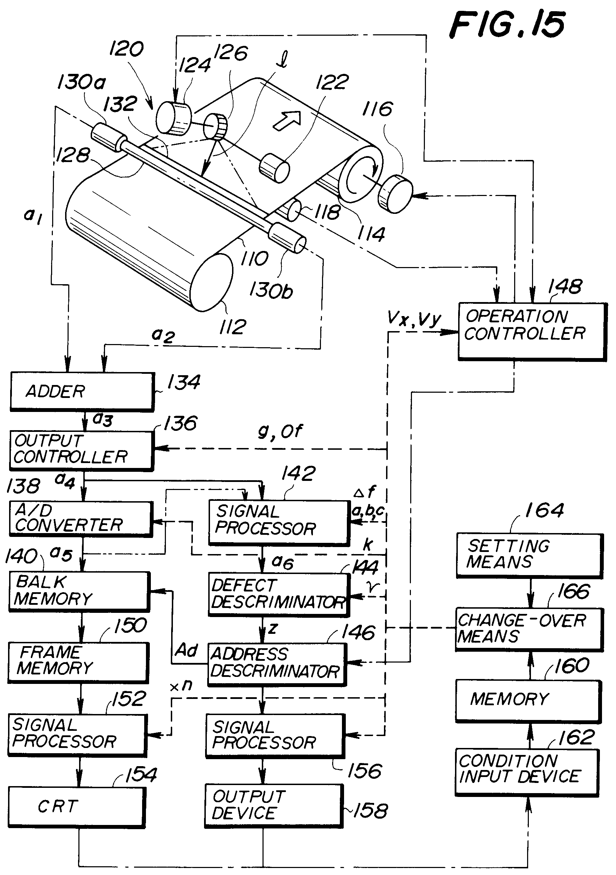

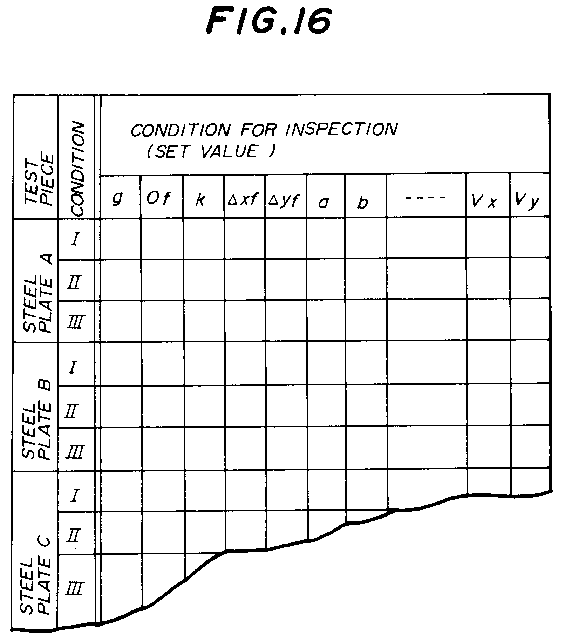

Fig. 15 is a block diagram showing a seventh embodiment of the invention; and Fig. 16 shows examples of the combination of inspection conditions which are stored in memory means.

Initially referring to Fig. 15, web material 110 to be inspected is generally made of a steel plate, paper or synthetic resin film, and such a web material 110 is supplied from a supply reel 112 to be passed to a take-up reel 114. The take-up reel 114 is driven by a driving motor 116. The running speed (feed rate) of the web material 110 taken up upon actuation of the driving motor 116 is sensed by a feed rate sensor 118 (a pulse generator in the illustrated embodiment). The images on the surface of the web 110 is read by a flying-spot scanning image sensor 120 as the web material 110 is continuously fed. In detail, the image sensor 120 feeds or projects a scanning beam $\ell$ composed of a laser beam supplied from a laser beam source 122 through a rotary mirror (polygonal mirror) 126 which is rotated by a motor 124 to scan the web material 110 along a main scanning direction, which extends along the width direction of the web material 110, at a constant angular rate; and at the same time the reflected light reflected by the surface of the web materail 110 is received by a light receiving rod 128 and the thus received light is guided to a pair of photo-sensors 130 (130a, 130b). Namely, the light receiving rod 128 is disposed vicinal to the main scanning line 132 so that the reflected light beam from the surface of the web material 110 is totally reflected by the internal surface of the light receiving rod 128 to be guided to the rod ends where the quantity of received light is determined by photo-receivers 130, such as photo-multipliers. The image signal received by each of the photo-receivers 130 is amplified by a pre-amplifier and a main amplifier, and then the wave form thereof is shapened to form analog image signals $a_1$ and $a_2$ shown in Fig. 15.

The level of each of the signal waves $a_1$, $a_2$ is gradually changed such that the level is lowered as the location along the main scanning line 132 for the scanning beam $\ell$ moves remoter from the center of the main scanning line 132 whereas the level is raised as the scanned location moves closer to the center of the main scanning line 132. According to this embodiment, both signals $a_1$ and $a_2$ are added together by an adder 134 so that the influence by the movement of the scanned location along the main scanning line 132 is removed to obtain a signal $a_3$.

An output controller 136 is provided to control the gain and the offset so that the image signal $a_3$ has a desired amplitude and output level. The data set used for controlling the signal in the output controller 136, including a gain g, an offset $O_f$ and other necessary data are supplied from a memory 160 which will be described in detail.

The signal $a_4$ having an output controlled by the controller 136 is converted, by means of an A/D converter 138, into a digital signal, for example, in the form of a density signal $a_5$ having 256 density tone graduations. Then, the converted signal is stored in a balk memory 140. Meantime, the data necessry for A/D conversion or related processing, for example, data relating to the tone graduation k, may be fed from a memory 160 which will be described in detail hereinafter.

The balk memory 140 has a memory capacity equivalent to the product (N x n) of the multiplication of the number N of picture elements on the main scanning line and the number n of scanning lines or rasters within the image display area, and stores digital image signals $a_5$ for every scanning lines in synchronism with the inspection width gate signals. Namely, the balk memory 140 has a so-called ring buffer structure so that a new datum is written on the earliest datum as all of the memory areas in the balk memory 140 have ben filled. Meantime, the inspection width gate signal indicates the width inspected by every scanning along

17

EP 0 475 454 A2

the main scanning line, the inspection width gate signal being fed in synchronism with the rotation of the rotary mirror 126.

On the other hand, the signals $a_4$ each having an output controlled by the output controller 136 are processed through a signal processor 142. Although signals are processed through an analog signal processing system in the illustrated embodiment, the output $a_5$ from the A/D converter 138 may be processed through a digital signal processing system by the same signal processor 142. This processor 142 processes the signals through filtering effected, for example, by the use of a differentiation filter (spatial filter).

The filtering process per se is the same as described in the descriptions of the second and fifth embodiments, and thus the description thereof will not be repeated here. However, although the function of the differentiation filter has been described as effecting processing of digital signals in the descriptions of the second and fifth embodiments, analog signals may be processed by the use of a known analog differentiation circuit to differentiate each of the image signals obtained by every scanning operation.

As an advantageous result of such filtering processing, periodical fluctuations (composed of low frequency components) contained in the signal $a_3$ and caused by the change in length of the optical path of the beam $\ell$, the change in incident angle of the beam $\ell$ or the change in background pattern or texture of the inspected surface are removed, and simultaneously the outline of the image along at least either one of the X or Y axis is clarified to improve the sensitivity in detection of defects at the subsequent steps.

In addition to or in lieu of the differentiation processing, density conversion may be effected by the signal processor 142. Such a density conversion or density tone conversion is carried out to convert the image signals within a certain pre-set range including the background density into a constant density, whereby the noise signals contained in the background signal are removed. Details of the density tone conversion have been described in the descriptions of the first to fourth embodiments, repeated description thereof will not be given here. Meanwhile, the parameters a, b and c used for such density tone conversion are fed from a memory 160 which will be described in detail hereinafter.

The signal $a_6$, which has been subjected to filtering through the differentiation filter as aforementioned, is deprived of low frequency components contained in the signal $a_4$ so that the defective portions are clarified, and the noise signals picked up from the background is eliminated by the density tone conversion.

The signal $a_6$ fed to a defect discriminator 144 is compared with a pre-set threshold value (or threshold range) to discriminate that a defect is present when $a_6$ is out of the range defined by the threshold value. Whereupon, the defect discriminator generates a signal z indicating the presence of a defect, and the signal z is fed to an address discriminator 146 where the address Ad of the defect is determined.

The address Ad may be determined by referring to the data fed from an operation controller 148. In detail, the operation controller 148 controls operation of a motor 116 so that the feeding rate of the web material 110 under inspection is conicident with an instructed rate $V_y$ which is set by an output from a memory 160 which will be described in detail hereinafter. The operation of a motor 124 is also controlled by the controller 148 so that the scanning speed along the main scanning line for the laser beam $\ell$ is coincident with the instructed speed $V_x$ which is set by an input from the memory 160. The operation controller 148 counts the rate pulses put from a rate sensor 118 to determine the Y coordinate along the subsidiary scanning direction, and at the same time the X coordinate along the main scanning direction is determined by referring to the rotating speed of the motor 124 and the lapsed time measured based on the inspection width gate signal. These coordinates (X, Y) are fed to the address discriminator 146 as the coordinates indicating the location just being scanned.

As the address Ad of the defect has been thus determined, the area containing this address, namely the area containing the defect, is transfered from the balk memory 140 to a frame memory 150. The coordinates (X, Y) may be stored together with the signal $a_5$ in this frame memory 150.

The content in the frame memory 150 may be processed by another signal processor 152, if necessary. For example, the portion containing a defect may be enlarged or reduced in size by a mugnification (x n) fed from the memory 160 as will be described hereinafter. The processed image is then displayed on a CRT or other type monitor 154. The address Ad of the defective portion may be displayed together with the image thereof. The image and the address Ad may be recorded in a video tape recorder, photomagnetic disk, floppy disk, hard disk or memory tape, as desired.

After determining the address Ad by an address discriminator 146, the signal is sorted by a signal processor 156. This process is to discriminate the extent and sort of individual defects in view of the dimensions or extension of the defect detected by the defect discriminator 144 to effect sorting or grouping of respective defects. The result of sorting process is fed to an output device 158, such as a printer or an external process computer connected through a data network.

The data used for sorting by the signal processor 156 are fed from a memory 160. The memory 160

18

stores plural combinations of inspection conditions (e.g. data including the pre-set conditions, etc.) separately for every kinds and inspection conditions of the materials to be inspected by the system of the invention, examples of the combinations being shown in Fig. 16 in the tabulated form. For instance, when the web material to be inspected is a steel plate A, respective sets of inspection condition data are stored as separate Sets I, II and III which are different from each other in that a first set (Set I) is used for the inspection of steel plate A in the dry state, a second set (Set II) being used for the inspection of steel plate A wetted with an oil, and a third set (Set III) is used for the inspection of colored steel plate. The inspection conditions to be stored include, for example, the gain g and the offset $O_f$ used in the aforementioned output controller 136, the tone number k used in the A/D converter 138, the filters $\Delta_x f$ and $\Delta_y f$ or the weighting factors of the differentiation filters used in the signal processor 142, set values a, b and c used for density conversion, the threshold v used in the defect discriminator 144, scanning rates $V_x$ and $V_y$, the magnification (x n) and the data necessary for sorting.

These pre-set values are fed by manual or automated operation from a condition input device 162. For instance, the operator who carries out an inspection may put preferable pre-set values for every inspection conditions for the particular material to be tested manually through a keyboard, while observing visually the image displayed on the monitor 154 or reading the printed results printed by an output device 158. One or more pre-set values may be determined by automated means. For example, the gain g and the offset $O_f$ may be automatically set so that the output level from the output controller 136 is kept within a predetermined range.

Thus, the particular inspection condition data set is designated or selected by manual or automatic operation through setting means 164 from plural data sets stored in the memory 160, and the thus designated data set is fed from the memory 160 to respective processing devices.

Since plural data sets each defining one combination of plural inspection parameters adapted for the inspection of various materials to be inspected are stored and a suitable set is selected to effect inspection of a particular material, according to this embodiment, there is no need of resetting respective parameters or inspection conditions separately, whereby the operation of the system is simplified.

Plural data sets for defining inspection condition data may be prepared and stored not only for accommodating the kinds or sorts of the material to be inspected but also depending on the condition of respective materials under inspection or the surface conditions of respective materials, whereby the condition for the inspection can be readily exchanged to be adapted for change in inspection condition.

The parameters to be stored as formulating the inspection condition may be put through a keyboard or like instrument into the system by manual operation, and a particular data set may be selected from the thus stored data sets of parameters, whereby the construction of the system can be simplified.

(Eighth Embodiment)

A eighth embodiment suited for the inspection of a web material having a joint area will now be described. In this eighth embodiment, the inspection conditions (particularly the threshold) for the inspection of the joint area are shifted to differ from the inspection conditions for the inspection of the area other than the joint area.

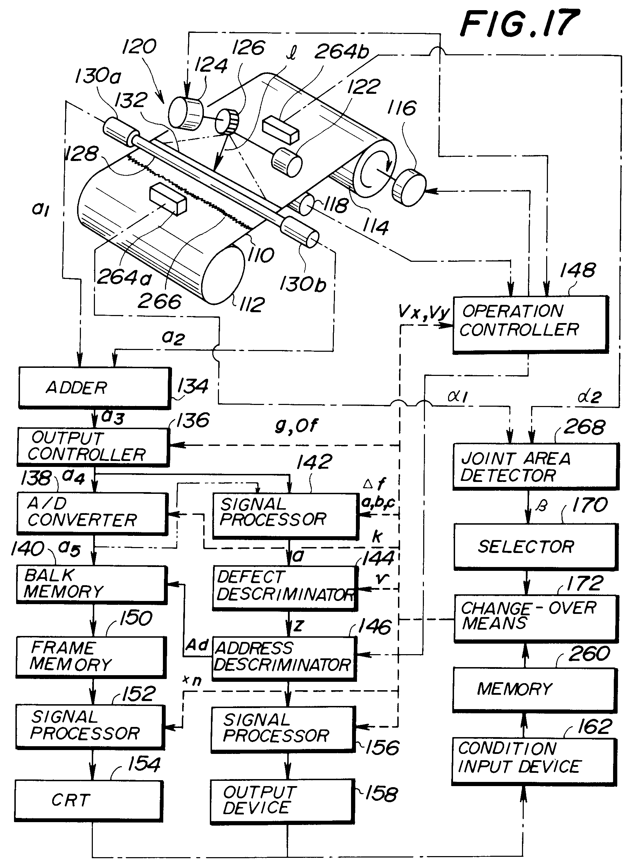

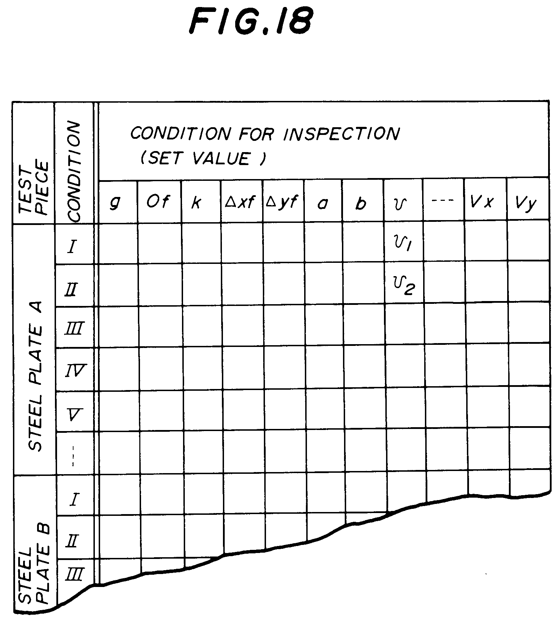

Fig. 17 is a block diagram showing the eighth embodiment; and Fig. 18 shows a table in which plural data sets or combinations of conditions for inspection are set forth.

This eighth embodiment has a construction similar to the seventh embodiment (shown in Fig. 15) except that paired joint sensors 264 (264a, 264b) and a joint area detector 268 are additionally incorporated. With the incorporation of these members, the content in the memory 260 is also changed. The other members are the same as in the seventh embodiment and shown in Fig. 17 while being denoted by same reference numerals, and repeated description thereof will not be given.

The threshold value (or range) v used in a defect detector 144 of the eighth embodiment is set to a level $v_1$ for detecting ordinary defects under normal inspection condition for scanning the area other than the joint area, and the threshold value v being reset to another level $v_2$ not to detect defects of normal level when a certain area or range (joint area) containing a joint seam 266 is scanned after the joint seam is sensed by a joint seam sensor 264 which will be described in detail hereinafter. These threshold levels $v_1$ and $v_2$ are supplied from a memory 260.

Data, i.e. the conditions for inspection, including these threshold levels $v_1$ and $v_2$, for processing image signals, are supplied from a memory 260. The memory 260 stores plural data sets or combinations for inspecting different kinds of materials under different conditions, as shown in Fig. 18 in the tabulated form. These data sets include a set (for example, Set I in Fig. 18) in which the threshold level (or range) $v_1$ for the inspection of the area other than the joint area is combined with other conditions for inspection (pre-set value or other data); and a set (for example Set II in Fig. 18) in which the threshold level $v_2$ for the inspection of the area containing therein the joint seam (joint area) is combined with other conditions for inspection. Other than the sets in which the threshold levels $v_1$ and $v_2$ are used (Sets I and II), data sets for the inspection of the steel plate are stored, the data sets III, IV, V, etc. being prepared and stored individually for inspecting the steel plate A in the dry state, in the state wetted with an oil, and in the colored state. The inspection conditions other than the threshold values $v$ to be stored include, for example, the gain $g$ and the offset $O_f$ used in the aforementioned output controller 136, the tone number $k$ used in the A/D converter 138, the filters $\Delta_x f$ and $\Delta_y f$ or weighting factors of the differentiation filters used in the signal processor 142, set values $a$, $b$ and $c$ used for density conversion, scanning rates $V_x$ and $V_y$, the magnification (x n) and the data necessary for sorting.

These pre-set values are fed manually or automatically from a condition input device 162, similar to the seventh embodiment.

A joint seam detector is denoted by 264 and comprises paired joint seam sensors (264a, 264b). The joint seam sensor 264a is disposed at an upstream location separated from the position at which the web material 110 is inspected, i.e. a main scanning line, by a certain distance, and another joint seam sensor 264b is disposed at a downstream location separated from the main scanning line 132 by a certain distance. Each of these joint seam sensors 264 discriminates a joint seam 266 based on an abrupt change in surface reflectivity of the web material 110 under inspection, or senses a pin hole or mark provided at the joint seam 266. As the upstream sensor 264a senses the leading margin of the joint area including the joint seam 266, a first signal $\alpha_1$ is generated. As the downstream sensor 264b senses the terminal margin of the joint area, a second joint signal $\alpha_2$ is generated. Reference numeral 268 designates a joint area detector which defines the pre-set zone (joint area) containing therein the joint seam 266, the joint area being defined in view of the first and second joint seam signals $\alpha_1$ and $\alpha_2$ and also in view of the data for defining a joint zone having a pre-set length or range, an exchange signal $\beta$ being fed from the area detector 268 to the selector 170.

The joint area detector 268 receives, for example, the joint seam signal $\alpha_1$ to change the change-over signal $\beta$ to "1", and resets the change-over signal $\beta$ to "0" upon receipt of the joint seam signal $\alpha_2$. The selector 170 selects from the memory 260 a data set corresponding to the joint area, for example Set II, when the change-over signal $\beta$ takes the value "1". When the change-over signal $\beta$ takes the value "0", one of the Sets I, III, IV, --- each corresponding to the particular combination of the kind of the material to be inspected and the condition thereof is selected manually or automatically. The change-over means 172 reads out a particular data set for defining the inspection conditions from plural data sets stored in the memory 260, the particular data set being designated by the setting means 170, and the thus selected data set is fed to related devices.

As will be appreciated from the foregoing, since a joint seam of the material under inspection is detected by a joint seam sensor pair, and the threshold $v$ for the discrimination of a defect is changed so that normal defects are not detected within a pre-set area or zone including the joint seam, the fear that the web material is judged as it were inferior due to a large number of defects contained in such a joint area is excluded.

Although plural sensors for sensing the joint seam may be provided both at the upstream and downstream sides of the main scanning line, as in the embodiment shown in Fig. 17, only a single joint seam sensor may be provided at the upstream side so that the joint area or zone is defined by combining the signal generated from the single sensor with an information concerning the feed rate of the web material.

For instance, the output (i.e. a leading margin sensing signal) from the upstream joint seam sensor 264a and the data indicating the feed rate sensed by the feed rate sensor 118 are fed to the joint area detector 268 to define the joint area extending from the center joint seam toward the upstream and downstream directions to cover an area having a pre-set width.

Upon receipt of the leading margin sensing signal, the selector 170 selects and keeps the first threshold, until a pre-set length of the web material has passed beneath the upstream sensor 264a. In lieu of the provision of a joint seam sensor, the joint area detector may be the one which receives and stores the data relating to the length of the web and the locations of joint seams and receives the data relating to the fed amount of the web from the feed rate sensor 118 to determine the location of any joint seam through arithmetic operation.

Although the memory 260 incorporated in the illustrated embodiment stores plural data sets each for identifying the particular kind of the material to be inspected and for defining different inspection conditions in addition to the threshold levels $v_1$ and $v_2$ respectively for the inspection of the joint are and the area other than the joint area, the memory may be the one which stores only the threshold levels $v_1$, $v_2$, ----.

(Ninth Embodiment)

A ninth embodiment of the invention will now be described, which is constructed to inspect a material by dividing the surface thereof into plural lanes (or blocks) which are inspected under different inspection conditions.

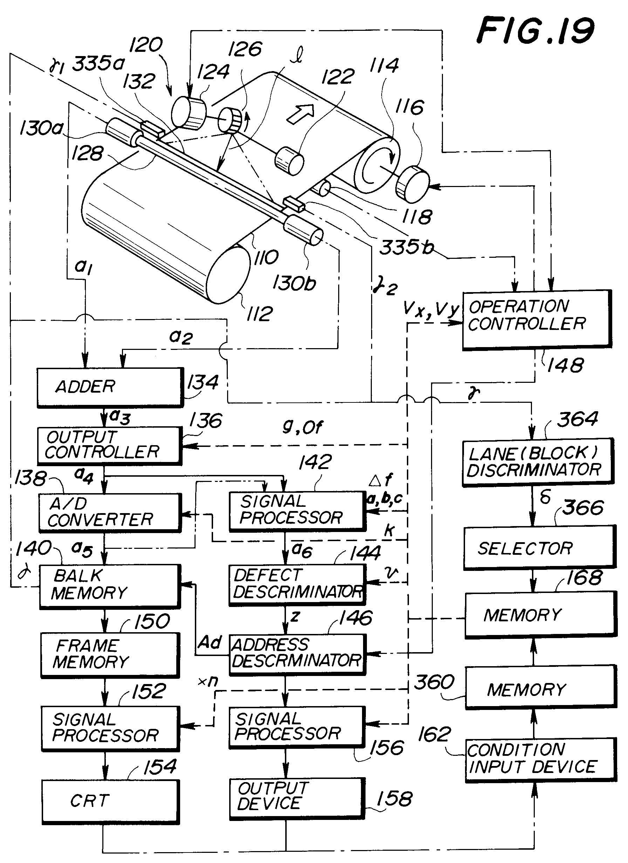

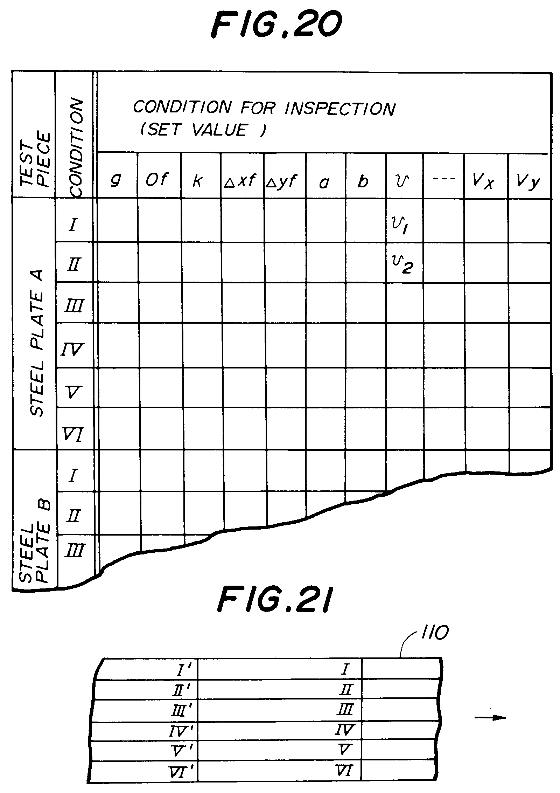

Fig. 19 is a block diagram of the ninth embodiment; Fig. 20 shows some examples of the combination of inspection conditions which are stored in a memory; and Fig. 21 shows one example having plural divided lanes or blocks on the surface of the material to be inspected.

This ninth embodiment has a similar construction as that of the seventh embodiment shown in Fig. 15, but further comprises photo-sensors 335 (335a, 335b) for generating a inspection width gate signal $\gamma$ and a lane (or block) discriminator 364 for discriminating or identifying the particular lane (or block), which is scanned at each scanning operation, based on the inspection width gate signal $\gamma$. Together with the incorporation of these members 335 and 364, the content in a memory 360 is also different from that in the memory 160 of the seventh embodiment. The other members are the same both in construction and operation as those in the seventh and eighth embodiments, and thus they are denoted by the same reference numerals and will not be described repeatedly.

Now referring to Fig. 19, paired photo-sensors 335 (335a, 335b) are disposed respectively opposite to the edges of the material 110 at the locations vicinal to the side ends of the main scanning line 132, the photo-sensors 335 generating a inspection width gate signal $\gamma$ showing the width of the material 110 scanned by a single cycle scanning operation, the gate signal $\gamma$ being the outputs $\gamma_1$ and $\gamma_2$ from the photo-sensors 335. The gate signal $\gamma$ takes the value "1" as the photo-sensor 335a senses the scanning beam $\ell$ and is returned to the value "0" as the photo-sensor 335b senses the scanning beam $\ell$, thus it takes the value "1" when the scanned portion of the inspected material 110 is within a pre-set width for every scanning operation.

Alternatively, the gate signal $\gamma$ may be generated by the processing of the image signal $a_4$ thereby to find both edges of the material 110.

The threshold (or range) values $v$ fed to the defect discriminator 144 are serially read out of a memory 360, which will be described hereinafter, as the scanning beam moves along the main scanning line 132, i.e. the particular lane now being scanned is changes, so that different threshold levels $v_1$, $v_2$, --- are fed for detrecting defects, if any.

The memory 360 supplies the data necessary for carrying out processing of the image signal, including the threshold levels $v_1$, $v_2$, --- , to determine the conditions for inspection. As shown in Fig. 20, the memory 360 stores plural data sets individually pertinent for the inspection of respective lanes I, II, --- VI. As shown diagramatically and exemplarily in Fig. 21, the surface of the material 110 to be inspected is divided into six lanes I to IV, and the data sets optimum for the inspection of respective lanes I to IV are stored in the memory 360.

In the illustrated embodiment, inspection conditions for respective lanes are memorized as they are individually suited for the inspection of different kinds of the material 110, namely separate data sets are memorized individually for Steel Plates A, B, etc. The data sets for inspection may be memorized separately in compliance with the condition of the material 110, for example, the condition where the surface thereof is dry, the condition where the surface is wetted or sticked with an oil and the condition where the surface is colored. In addition to the threshold values $v$ other parameters defining the inspection conditions are stored, which includes, for example, the gain $g$ and the offset $O_f$ used in the aforementioned output controller 136, the tone number $k$ used in the A/D converter 138, the filters $\Delta_x f$ and $\Delta_y f$ or the overlap factors of the filters used in the signal processor 142, set values $a$, $b$ and $c$ used for density conversion, scanning rates $V_x$ and $V_y$, the magnification $(x\ n)$ and the data necessary for sorting. These pre-set values are fed manually or automatically from a condition input device 162, similar to the seventh and eighth embodiments.

Reference numeral 364 designates a lane discriminator for discriminating the particular lane containing therein the now-scanned position along the main scannig line 132. In detail, as shown in Fig. 21, the web material 110 is imaginally splitted in the widthwise direction to be divided into plural lanes I to IV, and on the other hand the scanned location is determined based on the lapse of time from the time point at which the inspection width gate signal $\gamma$ is changed to "1" and the particular lane containing the now-scanned position is discriminated. A lane identification signal $\delta$ identifying the scanned lane is fed to a selctor 366.

The selector 366 selectively reads out the particular data set I corresponding to the lane I from the memory 360. As the lane indication signal $\delta$ indicates the condition "II", the memory 360 selects the inspection condition II. Thus, the conditions for inspection selectively selected by the selector 366 are changed to be the conditions I, II --- IV following the change of the lane (either one of the lanes I to IV) containing the scanned position. The change-over means 168 reads the particular data set of inspection conditions selected by the selector 366 from the memory 360 to feed the data or instructions to the related devices.

As the kind and/or condition of the material 110 to be inspected are changed, a different group or set of parameters for the particular inspection operation is selected by manual or automated operation to carry out similar operations for individual lanes.

Although plural different groups of parameters for inspection are stored respectively for accommodating the change in kind of the material to be inspected and change in condition thereof, only one group of parameters may be stored, within the scope of the invention, so that the system is adapted to inspect respective lanes of a single kind of material.

Each lane may be divided by imaginal lines apart from each other by a predetermined longitudinal distance, so that the surface of the material 110 is divided into the following blocks of:

I, II, ------- IV, -------

I', II', ------ IV', -------

I", II", ------ IV" --------

At the same time, plural data sets each for corresponding to each block are stored in the memory 360. In such a case, the lane discriminator 364 has a different function of discriminating each block based on the inspection width gate signal $\gamma$ and the signals indicating the feed amount of the material 110 (fed from the operation controller 148 or other members). Suitable inspection conditions are read out of the memory 360 to carry out the inspection operations correspondingly to respective blocks.

As to some lane or block, the threshold(s) or other parameters may be set not to detect any defects.

In the ninth embodiment, the surface area of the material to be inspected is divided into plural lanes extending along the lengthwise direction or into plural blocks divided by imaginal lengthwise and widthwise splitting lines, and each lane or block is inspected under a pertinent condition which is determined by reading the particular set of inspection conditions from the memory in which plural data sets corresponding to respective lanes or blocks are stored. Accordingly, even if the material to be inspected has a longitudinal lane containing periodical irregularities, wrinkles, weavings or rugged portions which might cause noise background signals to differentiate the pertinent conditions for inspection of respective lanes or blocks, all lanes or blocks can be inspected under pertinent inspection conditions individually set for respective lanes or blocks. As a result, the reliability in detection of defects is improved.

It is possible within the scope of the invention to prepare plural data sets corresponding to respective lanes or blocks to define pertinent parameters adapted for carrying out the inspection operations for individual materials, i.e. depending on the specific kind and condition of the material to be inspected, and to selectively set the conditions for inspection well suited for the inspection of different kinds of material and different coditions thereof. Accordingly, it is made possible to cope with changes in condition and/or kind of the material to be inspected.

Furthermore, the parameters for inspection operation for a particular lane or block may be selected such that the defects are not detected. It is convenient to use such a system when the material to be inspected has an area in which defects appear periodically along a certain zone or at constant intervals, the such area being cut off and disposed without using the same.

Although all of the first to ninth embodiments have been incorporated with a so-called flying spot scanning device wherein the surface of the material to be inspected has been scanned by a laser beam which is reflected by the scanned surface, it is possible, within the scope of the invention, to replace the flying spot type device by a so-called flying image type device wherein the material to be inspected is scanned by a linear light source extending in the widthwise direction of the material and the reflected light is passed through a rotary mirror to a photo-receiver, or a device in which the images are read by a line sensor or an area sensor.

Furthermore, although the system of the invention has been described by referring to nine embodiments as though it is a system for detecting faults or defective portions appearing on the surface of the web material to be inspected, the present invention is not limited only to the system for the inspection of the surface of a web material but includes system for detecting internal defects. For example, a system for detecting internal defects within a steel plate by the utilization of magneto-optical effect may be conceived within the scope of the invention. In this alternation, the material to be inspected is magnetized in an AC magnetic field, and the leaked magnetic field from the defect portion is detected by measuring the change in polarization of the reflected light.

The density conversion tables used in respective embodiments may be stored in the form of a two-dimensional map, or may be stored in the form of a linear equation or an equation of multiple order. It is desirous that the quantization level of the A/D converter, the size and weighting factor of the differentiation

22

filter and threshold for the smoothing filter may be set freely in wide ranges.

Although the informations relating to the detected defects have been recorded by a printer or like device in the embodiments described above, each information relating to the detected defects may be converted into a proper format having an appropriate level and then fed to another type recording medium such as a floppy disk or photomagnetic disk, or a visually or auditorily observable system such as a lamp or buzzer, or a computer or like signal processing system, or may be used as a contact signal.

## Claims

1. A defect inspection system for scanning a surface of an inspected material to pick up image signals from which any defects are detected, which comprises:

    (a) an A/D converter for converting analog image signals into digital density signals, said analog image signals being picked up by scanning said surface of said inspected material;

    (b) a tabulator for storing and supplying a density tone conversion table which is used to convert said digital density signals within a pre-set density range including at least the background density of said test piece into a constant digital density signal corresponding to a constant density;

    (c) a density converter for converting said digital density signals into converted signals by referring to said density tone conversion table; and

    (d) a display monitor for displaying an image using said converted digital signal.

2. The defect inspection system according to claim 1, wherein said tabulator comprises a setting means for setting said density tone conversion table by manual operation.

3. The defect inspection system according to claim 1, wherein said tabulator comprises setting means for automatically setting said density tone conversion table by referring to a density histogram drawn by plotting density signals picked up by scanning a pre-set image area on said surface of said inspected material.

4. The defect inspection system according to claim 1, wherein said tabulator stores plural density tone conversion tables and supplies a single density tone conversion table selected from stored plural density tone conversion tables.

5. The defect inspection system according to claim 4, wherein said tabulator comprises a selector for selecting said single density tone conversion table by manual operation.

6. The defect inspection system according to claim 4, wherein said tabulator comprises a selector for selecting said single density tone conversion table by referring to a density histogram drawn by plotting density signals picked up by scanning a pre-set image area on said surface of said inspected material.

7. A defect inspection system for scanning a surface of an inspected material to pick up image signals from which any defects are detected, which comprises:

    (a) an A/D converter for converting analog image signals into digital density signals, said analog image signals being picked up by scanning said surface of said inspected material;

    (b) a tabulator for storing and supplying a density tone conversion table which is used to convert said digital density signals within a pre-set density range including at least the background density of said inspected material into a constant digital density signal corresponding to a constant density;

    (c) a density converter for converting said digital density signals into converted density signals; and

    (d) defect detection means for comparing said converted density signals with a pre-set threshold to detect defects.

8. The defect inspection system according to claim 7, wherein said defect detection means comprises:

    (i) a multinarizer for multinarizing said converted density signals by at least one pre-set threshold; and

    (ii) a discriminator for discriminating the surface area from which multinarized density signals higher or lower than a pre-set density level are sensed at a frequency more than a pre-set frequency to feed an output signal identifying that such area has a defect.

9. The defect inspection system according to claim 8, further comprising a display monitor for displaying the multinarized density signal multinarized by said multinarizer so that defect images are visually detectable.

10. The defect inspection system according to claim 7, wherein said tabulator comprises a setting means for setting said density tone conversion table by manual operation.

11. The defect inspection system according to claim 7, wherein said tabulator comprises setting means for automatically setting said density tone conversion table by referring to a density histogram drawn by plotting density signals picked up by scanning a pre-set image area on said surface of said inspected material.

12. The defect inspection system according to claim 7, wherein said tabulator stores plural density tone conversion tables and supplies a single density tone conversion table selected from stored plural density tone conversion tables.

13. The defect inspection system according to claim 12, wherein said tabulator comprises a selector for selecting said single density tone conversion table by manual operation.

14. The defect inspection system according to claim 12, wherein said tabulator comprises a selector for selecting said single density tone conversion table by referring to a density histogram drawn by plotting density signals picked up by scanning a pre-set image area on said surface of said inspected material.

15. The defect inspection system according to claim 7, further comprising an spatial filter for spatial-filtering said converted density signals through a differentiation filter so that the filtered density signals passing through said spatial filter are compared with said pre-set threshold to detect defects.

16. The defect inspection system according to claim 15, further comprising a display monitor for displaying the filtered density signals by said spatial filter so that the defect images are visually detectable.

17. The defect inspection system according to claim 15, further comprising a smoothing filter for smoothing said filtered density signals to feed the smoothed density signals to said defect detection means.

18. The defect inspection system according to claim 17, further comprising a display monitor for displaying the smoothed density signal smoothened by said smoothing filter so that the defect images are visually detectable.

19. A defect inspection system for scanning a surface of an inspected material to pick up image signals from which any defects are detected, which comprises:
    (a) an A/D converter for converting analog image signals into digital density signals, said analog image signals being picked up by scanning said surface of said inspected material;
    (b) an spatial filter for spatial-filtering said digital density signals through a differentiaion filter; and
    (c) defect detection means for comparing the filtered density signals with a pre-set threshold to detect defects.

20. The defect inspection system according to claim 19, further comprising a density converter for converting said digital density signals fed from said A/D converter into convered density signals by referring to a pre-set density tone conversion table so that converted density signals are fed through said spatial filter.

21. The defect inspection system according to claim 20, wherein said pre-set density tone conversion table is a table for converting the digital density signals within a pre-set dinsity range including at least the background density of said inspected material under inspection into a constant digital density signal corresponding to a constant density.

22. The defect inspection system according to claim 19, wherein said differentiation filter is exchangeable.

23. The defect inspection system according to claim 22, wherein said differentiation filter is exchangeable by manual operation.

**24.** The defect inspection system according to claim 22, further comprising:

(i) a memory for storing plural differentiation filters for differentiaing said digital signals along different directions; and

(ii) a selector for selecting one or more differentiation filters from said plural differentiation filters depending on the particular material under inspection; and

wherein spatial filtering is carried out by using said selected one or more differentiation filters.

**25.** The defect inspection system according to claim 24, wherein said selector is operated by manual operation.

**26.** The defect inspection system according to claim 22, further comprising:

(i) a memory for storing plural differentiation filters having different mask sizes; and

(ii) a filter selector for selecting one differentiation filter from said plural differentiation filters depending on the particular material under inspection; and

wherein spatial filtering is carried out by using said selected differentiation filter.

**27.** The defect inspection system according to claim 26, wherein said selector is operated by manual operation.

**28.** The defect inspection system according to claim 22, further comprising:

(i) a memory for storing plural differentiation filters having different mask sizes and for differentiating said digital signals along different directions; and

(ii) a filter selector for selecting one differentiation filter from said plural differentiation filters depending on the particular material under inspection; and

wherein spatial filtering is carried out by using said selected differentiation filter.

**29.** The defect inspection system according to claim 28, wherein said selector is operated by manual operation.

**30.** A defect inspection system for scanning a surface of an inspected material to pick up image signals from which any defects are detected, which comprises:

(a) a memory for storing plural inspection data sets, each inspection data set determining plural conditions for carrying out inspection of said inspected material and

(b) a selector for selecting one inspection data set so that said inspected material is subjected to inspection under the selected inspection conditions.

**31.** The defect inspection system according to claim 30, wherein said memory stores plural inspection data sets, each corresponding to at least either one of the data for identifying said inspected material or the deta for defining the condition of said inspected material.

**32.** The defect inspection system according to claim 30, further comprising a condition input device for setting therethrough the inspection conditions by manual operation.

**33.** A defect inspection system for scanning a surface of a web material to pick up image signals from which any defects are detected, said web material having a joint seam, which comprises:

(a) a joint area detector for detecting a joint area including a joint seam of said web material;

(b) a memory for storing separately a first threshold for the inspection of said joint area and a second threshold for the inspection of the area other than said joint area, said first threshold being set not to detect any defects and said second threshold being set to detect any defects;

(c) a selector for selectively reading out said first threshold when said joint area is inspected and reading out said second threshold when the area other than said joint area is inspected; and

(d) a defect discriminator for comparing said image signals with the selected threshold to detect the defects.

**34.** The defect inspection system according to claim 33, further comprising a joint area sensor pair including an upstream sensor for sensing the leading margin of said joint area to feed a first joint signal and a downsream sensor for sensing the terminating margin of said joint area to feed a second joint signal, said selector selecting said first threshold upon receipt of said first joint signal and selecting said second threshold upon receipt of said second joint signal.

35. The defect inspection system according to claim 33, further comprising a joint area sensor including an upstream sensor for sensing the leading margin of said joint area to feed a leading margin sensing signal, said selector selecting said first threshold upon receipt of said leading margin sensing signal and keeping to select said first threshold until a pre-set length of said web material passes beneath said upstream sensor.

36. A defect inspection system for scanning a surface of a web material to pick up image signals from which any defects are detected, said web material being inspected along plural splitted lanes extending along the lengthwise directtion, which comprises:
    (a) a lane discriminator for discriminating the scanned lane;
    (b) a memory for storing separately plural inspection data sets for respective lanes;
    (c) a selector for reading out respective inspection data sets correspondingly for respective lanes; and
    (d) a defect discriminator for comparing said image signals with the selected inspection data sets to detect the defects.

37. The defect inspection system according to claim 36, wherein said memory stores plural inspection data sets, each corresponding to at least either one of the data for identifying said web material or the data for defining the condition of said web material.

38. The defect inspection system according to claim 36, wherein said memory stores one inspection data set for the inspection of at least one lane of which any defects will not be detected.

39. A defect inspection system for scanning a surface of a web material to pick up image signals from which any defects are detected, said web material being divided along the lengthwise and widthwise directions to be inspected separately, which comprises:
    (a) a block discriminator for discriminating the scanned block;
    (b) a memory for storing separately plural inspection data sets for respective blocks;
    (c) a selector for reading out respective inspection data sets correspondingly for respective blocks; and
    (d) a defect discriminator for comparing said image signals with the selected inspection data sets to detect the defects.

# FIG. I

# FIG.2

# FIG. 3

# FIG.4

# FIG.5

3 × 3 AREAS

X (INTEGRATION)

SPATIAL FILTER F

OUTPUT

# FIG.6

| | | |
|---|---|---|
| 1 | 0 | -1 |
| 1 | 0 | -1 |
| 1 | 0 | -1 |

$\triangle_x f$

| | | |
|---|---|---|
| 1 | 1 | 1 |
| 0 | 0 | 0 |
| -1 | -1 | -1 |

$\triangle_y f$

# FIG.8

| | | |
|---|---|---|
| 185 | 129 | 88 |
| 140 | 164 | 162 |
| 90 | 130 | 95 |

$\rightarrow$  | 1 |

THRESHOLD = 128
THRESHOLD FOR
PICTURE ELEMENT
NUMBER = 4

# FIG. 7

30 ADDER

x

32 A/D CONVERTER

y

34 DENSITY CONVERTER

38B TABULATOR (TABLE MEMORY)

Y

36 MONITOR

40B SELECTOR

DIFFERENTIATION FILTER 56

SMOOTHING FILTER 58

MULTINARIZER 42

DEFECT DISCRIMINATOR 44

DEFECT RECORDER 46

# FIG.9

# FIG.10

ADDER 72

A/D CONVERTER 74

LINE MEMORY 76

DIFFERENTIATION FILTER 78

DEFECT DISCRIMINATOR (COMPARATOR) 90

ADDRESS DISCRIMINATOR 92

PRINTER 94

DENSITY CONVERTER 82

FRAME MEMORY 84

MONITOR 86

SETTING MEANS 88

FIG. 11

EP 0 475 454 A2

# FIG.12

36

# FIG.13

## FIG.14A

LENGTHWISELY
EXTENDING
MARKS

## FIG.14B

WIDTHWISELY
EXTENDING
MARKS

## FIG.14C

HIGH DENSITY
SCALES

## FIG.14D

BLURS

## FIG.14E

EVEN

## FIG.14F

SPOTS

FIG.15

# FIG.16

| TEST PIECE | CONDITION | CONDITION FOR INSPECTION (SET VALUE) | | | | | | | | | |
|---|---|---|---|---|---|---|---|---|---|---|---|
| | | $g$ | $Of$ | $k$ | $\Delta xf$ | $\Delta yf$ | $a$ | $b$ | ---- | $Vx$ | $Vy$ |
| STEEL PLATE A | I | | | | | | | | | | |
| STEEL PLATE A | II | | | | | | | | | | |
| STEEL PLATE A | III | | | | | | | | | | |
| STEEL PLATE B | I | | | | | | | | | | |
| STEEL PLATE B | II | | | | | | | | | | |
| STEEL PLATE B | III | | | | | | | | | | |
| STEEL PLATE C | I | | | | | | | | | | |
| STEEL PLATE C | II | | | | | | | | | | |
| STEEL PLATE C | III | | | | | | | | | | |

FIG.17

# FIG.18

| TEST PIECE | CONDITION | CONDITION FOR INSPECTION (SET VALUE ) | | | | | | | | | | |
|---|---|---|---|---|---|---|---|---|---|---|---|---|
| | | $g$ | $Of$ | $k$ | $\triangle xf$ | $\triangle yf$ | $a$ | $b$ | $v$ | --- | $Vx$ | $Vy$ |
| STEEL PLATE A | I | | | | | | | | $v_1$ | | | |
| | II | | | | | | | | $v_2$ | | | |
| | III | | | | | | | | | | | |
| | IV | | | | | | | | | | | |
| | V | | | | | | | | | | | |
| | ⋮ | | | | | | | | | | | |
| STEEL PLATE B | I | | | | | | | | | | | |
| | II | | | | | | | | | | | |
| | III | | | | | | | | | | | |

# FIG.19

## FIG.20

| TEST PIECE | CONDITION | CONDITION FOR INSPECTION (SET VALUE ) | | | | | | | | | | |
|---|---|---|---|---|---|---|---|---|---|---|---|---|
| | | $g$ | $Of$ | $k$ | $\triangle xf$ | $\triangle yf$ | $a$ | $b$ | $v$ | --- | $V_x$ | $V_y$ |
| STEEL PLATE A | I | | | | | | | | $v_1$ | | | |
| | II | | | | | | | | $v_2$ | | | |
| | III | | | | | | | | | | | |
| | IV | | | | | | | | | | | |
| | V | | | | | | | | | | | |
| | VI | | | | | | | | | | | |
| STEEL PLATE B | I | | | | | | | | | | | |
| | II | | | | | | | | | | | |
| | III | | | | | | | | | | | |

## FIG.21

110

| I' | I | |
|---|---|---|
| II' | II | |
| III' | III | |
| IV' | IV | |
| V' | V | |
| VI' | VI | |